# EUROPÄISCHE PATENTSCHRIFT

(11) **EP 3 747 596 B1**
(45) Veröffentlichungstag und Bekanntmachung des Hinweises auf die Patenterteilung: **21.06.2023**
(21) Anmeldenummer: 20178454.3
(22) Anmeldetag: 05.06.2020
(51) Int. Cl.: B23Q 17/09, B23Q 17/24, B23P 11/02

(54) **MULTISPANN- UND MESS- UND/ODER EINSTELLSTATION FÜR WERKZEUGE UND VERFAHREN ZUR MONTAGE/DEMONTAGE EINES WERKZEUGS IN/AUS EINER WERKZEUGAUFNAHME**
MULTIPLE TENSIONING AND MEASURING AND / OR ADJUSTING STATION FOR TOOLS AND METHOD FOR ASSEMBLING/DISASSEMBLING A TOOL IN A TOOL HOLDER
STATION DE MULTITENSION ET DE MESURE ET/OU DE RÉGLAGE POUR OUTILS ET PROCÉDÉ DE MONTAGE/DÉMONTAGE D'UN OUTIL DANS/D'UN PORTE-OUTIL

(30) Priorität: 07.06.2019 DE 102019115607
(43) Veröffentlichungstag der Anmeldung: 09.12.2020
(73) Patentinhaber: E. Zoller GmbH & Co. KG, 74385 Pleidelsheim (DE)
(72) Erfinder: Zoller, Alexander, 74385 Pleidelsheim (DE); Zoller, Christoph, 74385 Pleidelsheim (DE)
(74) Vertreter: Daub, Thomas

(56) Entgegenhaltungen:
- EP-A2- 3 351 350
- WO-A1-2012/107038
- WO-A1-2019/038190
- DE-A1- 10 305 691
- DE-A1- 10 330 098
- DE-A1-102008 043 195
- DE-U1-202013 105 390
- DE-U1-202015 006 540
- JP-A- 2000 077 288

## Beschreibung

### Stand der Technik

Die Erfindung betrifft eine Multispann- und Mess- und/oder Einstellstation nach dem Anspruch 1 und ein Verfahren nach dem Anspruch 27.

Manuell zu bestückende Werkzeugspannstationen ohne Einstell- und/oder Vermessungsmöglichkeit sind aus dem Stand der Technik bekannt. Eine entsprechende Station gemäß Oberbegriff des Anspruchs 1 ist aus WO2019/038190A1 bekannt.

Die Aufgabe der Erfindung besteht insbesondere darin, eine gattungsgemäße Vorrichtung mit vorteilhaften Eigenschaften hinsichtlich einer Flexibilität bereitzustellen. Die Aufgabe wird erfindungsgemäß durch die Merkmale der Patentansprüche 1 und 27 gelöst, während vorteilhafte Ausgestaltungen und Weiterbildungen der Erfindung den Unteransprüchen entnommen werden können.

### Vorteile der Erfindung

Es wird eine Multispann- und Mess- und/oder Einstellstation für Werkzeuge, welche dazu vorgesehen ist, Werkzeuge automatisiert, vorzugsweise vollautomatisiert, in Werkzeugaufnahmen zu montieren und/oder aus Werkzeugaufnahmen zu demontieren und die Werkzeuge in den Werkzeugaufnahmen, insbesondere zumindest auf Länge, einzustellen und/oder zu vermessen vorgeschlagen, mit zumindest zwei, insbesondere vollautomatisierten, vorzugsweise zumindest einer Mehrzahl an gleichen und/oder unterschiedlichen, Werkzeugeinspanneinheiten, insbesondere zu einem Ein- und/oder Ausspannen der Werkzeuge in und/oder aus den Werkzeugaufnahmen, mit zumindest einem, insbesondere optischen, Mess- und/oder Einstellgerät für Werkzeuge und mit zumindest einem Handhabungsroboter, welcher zumindest dazu vorgesehen ist, Werkzeuge und Werkzeugaufnahmen zwischen den Werkzeugeinspanneinheiten und dem Mess- und/oder Einstellgerät zu bewegen. Dadurch kann vorteilhaft eine hohe Flexibilität erreicht werden. Insbesondere kann vorteilhaft ein zeit- und/oder personalsparendes Ein- und/oder Ausspannen von Werkzeugen in und/oder aus Werkzeugaufnahmen ermöglicht werden. Vorteilhaft können Kosten gering gehalten werden. Vorteilhaft können mehrere Arbeitsschritte, für welche insbesondere zuvor verschiedene Arbeitsstationen nötig waren, in einer einzigen Arbeitsstation zusammengefasst werden, wodurch insbesondere eine vorteilhaft hohe Effektivität erreicht werden kann.

Unter einer "Multispann- und Mess- und/oder Einstellstation" soll insbesondere eine Vorrichtung verstanden werden, welche zumindest dazu vorgesehen ist, eine Mehrzahl gleicher und/oder vorzugsweise unterschiedlicher Werkzeugaufnahmen, insbesondere zumindest teilweise gleichzeitig, mit Werkzeugen zu bestücken oder Werkzeuge aus einer Mehrzahl gleicher und/oder vorzugsweise unterschiedlicher Werkzeugaufnahmen, insbesondere zumindest teilweise gleichzeitig, zu entnehmen. Insbesondere ist die Multispann- und Mess- und/oder Einstellstation zumindest dazu vorgesehen, zumindest teilweise gleichzeitig ein Werkzeug aus einer Werkzeugaufnahme zu entnehmen und ein anderes Werkzeug in einer andere Werkzeugaufnahme zu befestigen. Insbesondere ist die Multispann- und Mess- und/oder Einstellstation zumindest dazu vorgesehen, zumindest teilweise gleichzeitig ein Werkzeug aus einer Werkzeugaufnahme zu entnehmen oder ein Werkzeug in einer Werkzeugaufnahme zu befestigen und ein anderes Werkzeug in einer anderen Werkzeugaufnahme zu vermessen und/oder einzustellen. Darunter, dass ein Vorgang "vollautomatisiert" ist soll insbesondere verstanden werden, dass der Vorgang frei von jeglicher Beeinflussung eines Bedieners, insbesondere abgesehen von einem Starten und/oder einem Stoppen des Vorgangs, ist. Die Werkzeuge sind insbesondere als Schaftwerkzeuge, vorzugsweise als Rotations-Schaftwerkzeuge, beispielsweise Bohrer, Fräser, Profilwerkzeuge und/oder Reibahlen ausgebildet, wobei vorzugsweise ein Schaft der Schaftwerkzeuge zu einer Montage in einer Werkzeugaufnahme vorgesehen ist.

Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, beispielsweise als ein Schrumpfspannfutter, als ein Hydrodehnfutter, als ein Pressspannfutter, als ein Spannzangenfutter oder dergleichen, ausgebildet. Insbesondere ist die Multispann- und Mess- und/oder Einstellstation zumindest für Werkzeugaufnahmen der Größen HSK 40 bis HSK 100 und/oder Werkzeugaufnahmen anderer Typen wie SK, Coromant Capto^{®}, KM oder dergleichen, vorgesehen. Unter einer "Werkzeugeinspanneinheit" soll insbesondere eine Einheit verstanden werden, welche dazu vorgesehen ist, ein Werkzeug in eine Werkzeugaufnahme zu montieren und/oder ein Werkzeug aus einer Werkzeugaufnahme zu demontieren. Insbesondere bildet die Werkzeugeinspanneinheit eine Werkzeugeinspann- und/oder Werkzeugausspanneinheit aus. Insbesondere ist die Werkzeugeinspanneinheit dazu vorgesehen, einen Spannmechanismus einer Werkzeugaufnahme zu aktivieren, insbesondere einzustellen, und/oder den Spannmechanismus der Werkzeugaufnahme zu deaktivieren, insbesondere zu lösen. Insbesondere umfasst die Multispann- und Mess- und/oder Einstellstation zumindest eine Mehrzahl an Werkzeugeinspanneinheiten, wobei zumindest zwei Werkzeugeinspanneinheiten gleich ausgebildet sein können und/oder für eine Bedienung eines identischen Spannmechanismus vorgesehen sein können und/oder wobei zumindest zwei Werkzeugeinspanneinheiten unterschiedlich ausgebildet sein können und/oder für eine Bedienung unterschiedlicher Spannmechanismen vorgesehen sein können. Es ist beispielsweise denkbar, dass zumindest zwei für eine Bedienung eines identischen Spannmechanismus vorgesehene Werkzeugspanneinheiten für unterschiedliche Größen von Werkzeugaufnahmen und/oder für unterschiedliche Werkzeuge vorgesehen sind. Insbesondere ist jede Werkzeugeinspanneinheit ausschließlich zur Bedienung eines einzigen Spannmechanismus vorgesehen. Unter dem "Spannmechanismus" soll insbesondere ein Hydrodehn-Spannmechanismus, ein Schrumpfspannmechanismus, ein Spannzangenspannmechanismus oder ein Pressspannmechanismus, vorzugsweise ein mittels einer Überwurfmutter gespannter Spannmechanismus verstanden werden. Unter einem "Montieren" eines Werkzeugs in einer Werkzeugaufnahme soll insbesondere ein Einsetzen des Werkzeugs in eine Werkzeugaufnahmeöffnung der Werkzeugaufnahme und ein anschließendes im Wesentlichen auszugfestes Befestigen des Werkzeugs in der Werkzeugaufnahme verstanden werden. Unter einem "Demontieren" eines Werkzeugs aus einer Werkzeugaufnahme soll insbesondere ein Lösen einer, eine Befestigung des Werkzeugs in der Werkzeugaufnahme bewirkenden Kraft und ein Herausnehmen des Werkzeugs aus der Werkzeugaufnahmeöffnung der Werkzeugaufnahme verstanden werden.

Unter einem "Vermessen" soll insbesondere ein Detektieren und Aufzeichnen zumindest eines Parameters, vorzugsweise einer Vielzahl an Parametern einer Werkzeugeinheit verstanden werden, wobei mittels der Messdaten eine, vorzugsweise vollständige, Charakterisierung der Werkzeugeinheit vorgenommen werden kann, welche insbesondere dazu vorgesehen ist, an eine Werkzeugmaschine, an welche die Werkzeugeinheit montiert werden soll, übergeben werden kann. Eine "Werkzeugeinheit" umfasst insbesondere ein Werkzeug und eine Werkzeugaufnahme, wobei vorzugsweise das Werkzeug auszugsfest in der Werkzeugaufnahme montiert ist. Unter einem "Einstellen" soll insbesondere ein Einstellen einer Relativposition, insbesondere einer relativen Rotationsposition und/oder einer relativen Längsposition, eines Werkzeugs in einer Werkzeugaufnahme verstanden werden. Insbesondere wird bei dem Einstellen der Werkzeugeinheit eine Gesamtlänge aus Werkzeugfutter und Werkzeug und/oder eine Einstecktiefe eines Werkzeugs in einem Werkzeugfutter festgelegt. Unter einem "Einstellen auf Länge" soll insbesondere ein Einstellen einer Gesamtlänge der Werkzeugaufnahme mit dem darin befestigten Werkzeug verstanden werden und/oder ein Einstellen einer Einstecktiefe des Werkzeugs in der Werkzeugaufnahmeöffnung der Werkzeugaufnahme. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Mess- und/oder Einstellgerät für Werkzeuge" soll insbesondere ein Gerät verstanden werden, welches zumindest dazu vorgesehen ist, zumindest eine Länge, zumindest einen Winkel, zumindest eine Kontur und/oder zumindest eine Außenform eines Werkzeugs zumindest teilweise zu erfassen und/oder einzustellen.

Unter einem "Handhabungsroboter" soll insbesondere ein Industrieroboter, vorzugsweise ein Gelenkarmroboter, insbesondere mit zumindest drei, vorzugsweise zumindest vier, bevorzugt zumindest fünf und besonders bevorzugt zumindest sechs unabhängig voneinander beweglichen Robotergelenken, eine Handhabungseinrichtung und/oder ein Manipulator verstanden werden. Insbesondere ist der Handhabungsroboter dazu vorgesehen, einen Materialfluss von und/oder zu zumindest einer Wirkstelle zu bewältigen. Eine Wirkstelle kann insbesondere zumindest ein Teil eines Bauteils und/oder einer Komponente des Mess- und/oder Einstellgeräts und/oder zumindest einer Werkzeugeinspanneinheit, welches/welche zumindest dazu vorgesehen ist, einen funktionalen Arbeitsschritt durchzuführen, sein. Vorzugsweise ist die Wirkstelle jeweils eine Halterung der Werkzeugeinspanneinheit oder des Mess- und/oder Einstellgeräts für eine Werkzeugaufnahme oder eine in einer Halterung der Werkzeugeinspanneinheit oder des Mess- und/oder Einstellgeräts eingesetzte Werkzeugaufnahme. Insbesondere umfasst der Handhabungsroboter zumindest eine Greifereinheit, welche zumindest dazu vorgesehen ist, ein Werkzeug, eine Werkzeugaufnahme und/oder einen Vorsatzhalter zu greifen. Vorzugsweise weist der Handhabungsroboter zumindest eine Robotersteuerungseinheit auf. Die Robotersteuereinheit weist insbesondere eine speziell programmierte Robotersteuereinrichtung auf, welche dazu vorgesehen ist, Aktionen und/oder Bewegungen des Roboters und/oder zumindest einer Teilkomponente des Handhabungsroboters zu steuern, zu regeln und/oder auszuwählen. Vorzugsweise weist die Robotersteuereinheit zumindest eine Bedienerschnittstelle auf, insbesondere zu einer Beeinflussung einer Bewegung zumindest einer Teilkomponente des Roboters und/oder einer Beeinflussung der Programmierung der Robotersteuereinrichtung. Vorzugsweise weist der Handhabungsroboter zumindest eine Sensoreinheit zu einer Bestimmung zumindest eines Umgebungsparameters auf. Die Sensoreinheit kann insbesondere zumindest einen Kraft- und/oder Momentsensor, zumindest einen Sensor für elektromagnetische Wellen, zumindest einen Schallsensor, zumindest einen Drucksensor, zumindest einen Vibrationssensor, zumindest einen Gyrosensor, zumindest einen Feuchtigkeitssensor und/oder zumindest einen Temperatursensor aufweisen. Insbesondere ist der Handhabungsroboter dazu vorgesehen, Werkzeuge und Werkzeugaufnahmen in die Werkzeugeinspanneinheiten und/oder in das Mess- und/oder Einstellgerät einzusetzen oder daraus zu entnehmen.

Zudem wird vorgeschlagen, dass der Handhabungsroboter zumindest einen Temperatursensor, vorzugsweise eine Mehrzahl an Temperatursensoren, aufweist, welche/r dazu vorgesehen ist/sind, eine Temperatur des Werkzeugs- und/oder der Werkzeugaufnahme zu bestimmen und einen Positioniervorgang des Roboters, beispielsweise einer Werkzeugaufnahme oder einer Werkzeugeinheit in einer Haltevorrichtung einer Werkzeugeinspanneinheit, zu optimieren. Dadurch kann vorteilhaft eine besonders hohe Präzision erreicht werden. Insbesondere ist denkbar, dass zumindest einer Stelle der Multispann- und Mess- und/oder Einstellstation, vorzugsweise zumindest mehreren Stellen der Multispann- und Mess- und/oder Einstellstation, beispielsweise zumindest dem Mess- und/oder Einstellgerät oder zumindest der Schrumpfspannstation zumindest ein Temperatursensor zugeordnet ist. Durch eine möglichst genaue Kenntnis der Temperatur der Werkzeugeinheit und/oder der Werkzeugaufnahme kann vorteilhaft eine Temperaturausdehnung eines Materials bei einer Messung durch das Mess- und/oder Einstellgerät mitberücksichtigt werden. Beispielsweise kann vorteilhaft eine noch zu erwartende Längenänderung einer Werkzeugeinheit bis zu einer vollständigen Abkühlung der Werkzeugeinheit berücksichtigt und die Messdaten der Werkzeugeinheit entsprechend korrigiert werden.

Ferner wird erfindungsgemäß vorgeschlagen, dass die zumindest zwei, insbesondere vollautomatisierten, Werkzeugeinspanneinheiten als unterschiedliche Werkzeugeinspanneinheiten ausgebildet sind, welche zumindest dazu vorgesehen sind, Werkzeuge automatisiert, vorzugsweise vollautomatisiert, in jeweils verschiedene Werkzeugaufnahmen mit jeweils unterschiedlichen Spannmethoden zu montieren und/oder aus jeweils verschiedenen Werkzeugaufnahmen mit jeweils unterschiedlichen Spannmethoden zu demontieren. Dadurch kann vorteilhaft eine besonders hohe Flexibilität erreicht werden. Vorteilhaft kann eine einzelne Montagestation für verschiedene Arten von Werkzeugfuttern verwendet werden. Dadurch kann vorteilhaft eine Platz-, Zeit- und/oder Personalersparnis erreicht werden. Außerdem kann vorteilhaft eine Art "Black Box" für eine Montage von Werkzeugen in Werkzeugaufnahmen geschaffen werden, welche insbesondere ohne besondere Kenntnis von verschiedenen Arten von Werkzeugfuttern oder Spannmechanismen bedienbar ist. Dadurch kann vorteilhaft eine besonders hohe Bedienerfreundlichkeit geschaffen werden.

Zudem wird vorgeschlagen, dass die Werkzeugeinspanneinheiten, insbesondere die Werkzeugeinspanneinheiten für Werkzeugaufnahmen mit unterschiedlichen Spannmethoden, voneinander, insbesondere vollständig, getrennt ausgebildet sind. Dadurch kann vorteilhaft eine hohe Flexibilität erreicht werden. Insbesondere kann vorteilhaft ein paralleler Betrieb mehrerer Werkzeugeinspanneinheiten ermöglicht werden, wodurch vorteilhaft eine besonders hohe Arbeitsgeschwindigkeit erreicht werden kann. Zudem kann dadurch vorteilhaft eine flexible Kombination verschiedener Werkzeugeinspanneinheiten innerhalb der Multispann- und Mess- und/oder Einstellstation ermöglicht werden, beispielsweise angepasst an zu erwartende Anzahlen von Werkzeugaufnahmen bestimmter Typen. Vorteilhaft kann ein modularer Aufbau ermöglicht werden. Insbesondere soll darunter, dass die Werkzeugeinspanneinheiten "getrennt" voneinander ausgebildet sind verstanden werden, dass unterschiedliche Werkzeugeinspanneinheiten, insbesondere abgesehen von Verbindungselementen zu einer Montage der separaten Werkzeugeinspanneinheiten miteinander, frei sind von gemeinsamen Bauteilen, vorzugsweise gemeinsamen funktionalen Bauteilen, welche an einer Durchführung eines Werkzeugeinspannvorgangs oder eines Werkzeugausspannvorgangs direkt oder indirekt beteiligt sind. Vorzugsweise bilden voneinander getrennt ausgebildete Werkzeugeinspanneinheiten, insbesondere vollständig, unabhängig voneinander funktionsfähige Werkzeugeinspanneinheiten aus. Insbesondere sind voneinander getrennt ausgebildete Werkzeugeinspanneinheiten dazu vorgesehen, gleichzeitig oder zeitlich überlappend zu arbeiten, vorzugsweise Werkzeugeinspannvorgänge oder Werkzeugausspannvorgänge vorzunehmen. Insbesondere sind die Positionen von getrennten Werkzeugeinspanneinheiten innerhalb der Multispann- und Mess- und/oder Einstellstation beliebig und ohne Beeinträchtigung der jeweiligen Funktionsfähigkeiten austauschbar. Insbesondere bilden die Werkzeugeinspanneinheiten voneinander getrennte Module aus.

Weiterhin wird vorgeschlagen, dass die Multispann- und Mess- und/oder Einstellstation zumindest eine dritte Werkzeugeinspanneinheit für Werkzeugaufnahmen mit einer dritten Spannmethode, welche unterschiedlich ist von den durch die beiden anderen Werkzeugeinspanneinheiten ausführbaren Spannmethoden, aufweist. Dadurch kann vorteilhaft eine noch höhere Flexibilität erreicht werden.

Außerdem wird vorgeschlagen, dass die Multispann- und Mess- und/oder Einstellstation zumindest eine vierte Werkzeugeinspanneinheit für Werkzeugaufnahmen mit einer vierten Spannmethode, welche unterschiedlich ist von den durch die drei anderen Werkzeugeinspanneinheiten ausführbaren Spannmethoden, aufweist. Dadurch kann vorteilhaft eine noch höhere Flexibilität erreicht werden.

Wenn die Werkzeugeinspanneinheiten und das Mess- und/oder Einstellgerät zumindest abschnittsweise rund um den Handhabungsroboter angeordnet sind, kann vorteilhaft eine hohe Flexibilität erreicht werden. Insbesondere kann der Handhabungsroboter vorteilhaft derart angeordnet werden, dass er alle Werkzeugeinspanneinheiten sowie das Mess- und/oder Einstellgerät bestücken kann. Vorteilhaft kann eine hohe Effizienz erreicht werden. Vorteilhaft kann dadurch die Multispann- und Mess- und/oder Einstellstation besonders kompakt ausgebildet werden. Darunter, dass Objekte, insbesondere Werkzeugeinspanneinheiten und/oder Mess- und/oder Einstellgeräte, "abschnittsweise rund um" ein weiteres Objekt, insbesondere einen Handhabungsroboter, angeordnet sind soll verstanden werden, dass das weitere Objekt zu mehr als einer Seite, vorzugsweise zumindest zu zwei Seiten, bevorzugt zumindest zu drei Seiten und besonders bevorzugt zu vier Seiten, von den Objekten umgeben ist. Insbesondere sind die abschnittsweise rund um das weitere Objekt angeordneten Objekte nicht linear in einer einzigen Reihe angeordnet. Es ist jedoch denkbar, dass die Objekte in zwei in einem Winkel zueinander angeordneten Reihen angeordnet sind oder dass die Objekte zwei direkt gegenüberliegende Reihen ausbilden, in deren Mitte das weitere Objekt angeordnet ist. Insbesondere sind die abschnittsweise rund um das weitere Objekt angeordneten Objekte zumindest abschnittsweise entlang einer gebogenen Bahn, beispielsweise entlang einer Kreisbahn und/oder entlang einer zumindest abschnittsweise gewinkelten Bahn, beispielsweise entlang einer eine oder mehrere Ecken umfassenden Bahn, angeordnet. Vorzugsweise sind die Werkzeugeinspanneinheiten und das Mess- und/oder Einstellgerät in einem Oval, in einem Kreis oder bevorzugt in einem Rechteck um den Handhabungsroboter angeordnet. Insbesondere sind die Werkzeugeinspanneinheiten, das Mess- und/oder Einstellgerät und der Handhabungsroboter in einer gemeinsamen Ebene angeordnet. Es ist jedoch auch denkbar, dass zumindest zwei Werkzeugeinspanneinheiten vertikal übereinandergestapelt sind.

Außerdem wird vorgeschlagen, dass die Multispann- und Mess- und/oder Einstellstation ein gemeinsames Gehäuse aufweist, welches zumindest den Handhabungsroboter, die Werkzeugeinspanneinheiten und das Mess- und/oder Einstellgerät zumindest zu einem Großteil umschließt. Dadurch kann vorteilhaft eine hohe Arbeitssicherheit erreicht werden. Zudem kann vorteilhaft die Multispann- und Mess- und/oder Einstellstation besonders kompakt ausgebildet werden. Unter "einem Großteil" soll in diesem Zusammenhang insbesondere 51 %, vorzugsweise 60 %, vorteilhaft 70 %, bevorzugt 80 % und besonders bevorzugt 90 % verstanden werden. Insbesondere umschließt das Gehäuse die Multispann- und Mess- und/oder Einstellstation zumindest zu vier Seiten, vorzugsweise zumindest zu fünf Seiten und bevorzugt zumindest zu sechs Seiten zu einem Großteil.

Des Weiteren wird vorgeschlagen, dass das Gehäuse eine öffenbare Klappe aufweist, welche einen Zugang zu dem Mess- und/oder Einstellgerät und eine manuelle Bedienung des Mess- und/oder Einstellgeräts, insbesondere von außerhalb des Gehäuses, erlaubt. Dadurch kann vorteilhaft eine besonders hohe Flexibilität erreicht werden. Vorteilhaft kann dadurch eine Auswahl zwischen einer manuellen und einer automatischen Bedienung des Mess- und/oder Einstellgeräts ermöglicht werden. Dies kann insbesondere dann vorteilhaft sein, wenn ein Bediener eine manuelle Messung zwischenschalten möchte, beispielsweise wenn er schnell eine Werkzeugeinheit überprüfen möchte oder wenn er eine Vermessung einer bestimmten Werkzeugeinheit vorziehen möchte. Vorteilhaft benötigt ein Bediener dadurch kein weiteres separates Mess- und/oder Einstellgerät vor Ort, so dass Kosten eingespart und/oder ein Platzbedarf gering gehalten werden kann. Insbesondere schaltet die Multispann- und Mess- und/oder Einstellstation bei einer Öffnung der Klappe automatisch in einen manuellen Modus und beendet und/oder pausiert alle aktuell laufenden Vorgänge. Alternativ ist denkbar, dass eine Öffnung der Klappe nur dann freigegeben ist, wenn alle laufenden Vorgänge der Werkzeugeinspanneinheiten und/oder des Mess- und/oder Einstellgeräts beendet und/oder pausiert sind und/oder wenn das Mess- und/oder Einstellgerät frei ist, d.h. sich keine Werkzeugaufnahme in dem Mess- und/oder Einstellgerät befindet. Alternativ ist denkbar, dass bei einem Öffnen der Klappe lediglich eine Bestückung des Mess- und/oder Einstellgeräts durch den Handhabungsroboter unterbunden wird, jedoch die Werkzeugeinspanneinheiten weiter automatisch bestückt und betrieben werden.

Des Weiteren wird vorgeschlagen, dass die Multispann- und Mess- und/oder Einstellstation einen modularen Aufbau aufweist. Dadurch kann vorteilhaft eine besonders hohe Flexibilität erreicht werden. Insbesondere kann vorteilhaft eine Zusammensetzung der Multispann- und Mess- und/oder Einstellstation flexibel auf unterschiedliche Vorgaben, Kundenwünsche und/oder Bedürfnisse an einem Einsatzort angepasst werden. Beispielsweise kann die Anzahl und Art der Werkzeugeinspanneinheiten frei gewählt werden. Zudem kann vorteilhaft ein einfacher Umbau, insbesondere ein einfaches Up- oder Downgrade der Multispann- und Mess- und/oder Einstellstation ermöglicht werden. Vorteilhaft kann eine besonders einfache Montage oder Demontage erreicht werden. Durch den modularen Aufbau können insbesondere die Arten und/oder die Positionen der Werkzeugeinspanneinheiten beliebig kombiniert werden. Vorteilhaft verbleibt jedoch das Mess- und/oder Einstellgerät immer an der Position des Gehäuses, an der sich die Klappe befindet. Insbesondere bilden die Werkzeugeinspanneinheiten und/oder das Mess- und/oder Einstellgerät Module aus, welche beliebig miteinander koppelbar ausgebildet sind. Insbesondere weist jedes Modul eine einheitliche Breite auf. Insbesondere weist jedes Modul eine einheitliche Tiefe auf. Insbesondere weist jedes Modul eine einheitliche Höhe auf. Insbesondere befinden sich die funktionalen Einheiten jedes Moduls, das heißt insbesondere die den jeweiligen Spannmechanismus ausführenden Spannvorrichtungen der Werkzeugeinspanneinheiten und/oder die Mess- und/oder Einstellvorrichtungen der Mess- und/oder Einstelleinheit, auf einer einheitlichen Höhe. Insbesondere umfasst jedes Modul zumindest eine Auflagefläche, welche dazu vorgesehen ist, die jeweilige funktionale Einheit aufzunehmen, wobei sich die Auflageflächen jeweils auf einheitlichen Höhen befinden. Insbesondere ist denkbar, dass zumindest eine Werkzeugeinspanneinheit, zumindest das Mess- und/oder Einstellgerät und/oder der Handhabungsroboter aus zumindest zwei oder mehr Modulen besteht. Unter einem "Modul" soll insbesondere eine technische Einheit verstanden werden, die mit anderen Einheiten zu einem höherwertigen Ganzen, insbesondere der Multispann- und Mess- und/oder Einstellstation zusammengefügt werden kann. Insbesondere lassen sich einzelne Module, je nach Anforderung und/oder Kundenwunsch unterschiedlich zu dem Ganzen kombinieren. Insbesondere sind jedoch bereits die einzelnen Module für sich funktionsfähig. Insbesondere sind die einzelnen Module in der Lage, voneinander unabhängig zu operieren. Vorteilhaft bilden die Module Bauteile eines Baukastensystems aus. Vorteilhaft bildet ein Modul ein austauschbares, komplexes Element innerhalb eines Gesamtsystems aus, das eine geschlossene Funktionseinheit bildet. Insbesondere ist bei dem modularen Aufbau ein System, insbesondere die Multispann- und Mess- und/oder Einstellstation aus Bauteilen, insbesondere den Werkzeugeinspanneinheiten, dem Mess- und/oder Einstellgerät und/oder dem Handhabungsroboter, entlang definierter Stellen, insbesondere definierter Schnittstellen, zusammengesetzt. Insbesondere sind die Schnittstellen aller Module identisch und/oder kompatibel zueinander ausgebildet.

Wenn zumindest eine Anordnung zumindest eines Teils der Komponenten der Multispann- und Mess- und/oder Einstellstation, d.h. beispielsweise der einzelnen Werkzeugeinspanneinheiten, innerhalb des Gehäuses modular wählbar und/oder modular änderbar ist, kann vorteilhaft eine besonders hohe Flexibilität erreicht werden.

Wenn außerdem zumindest eine Zusammenstellung zumindest eines Teils der Komponenten der Multispann- und Mess- und/oder Einstellstation, d.h. beispielsweise der einzelnen Werkzeugeinspanneinheiten, innerhalb des Gehäuses modular wählbar und/oder modular änderbar ist, kann vorteilhaft eine besonders hohe Flexibilität erreicht werden.

Ferner wird vorgeschlagen, dass zumindest eine Werkzeugeinspanneinheit als eine Schrumpfspannstation ausgebildet ist, welche insbesondere dazu vorgesehen ist, Werkzeuge mittels eines induktiven Erwärmens in/aus Schrumpfspannfutter/n zu montieren/demontieren. Dadurch kann vorteilhaft eine hohe Flexibilität erreicht werden, insbesondere indem zumindest ein Schrumpfspannen von Werkzeugen in Werkzeugaufnahmen durch die Multispann- und Mess- und/oder Einstellstation, vorzugsweise in Kombination mit einem Einstellen und/oder Vermessen der hergestellten Werkzeugeinheiten, ermöglicht werden kann, bevorzugt als eine von mehreren unterschiedlichen durch die Multispann- und Mess- und/oder Einstellstation bewältigbaren Spannmethoden. Die Schrumpfspannstation ist insbesondere dazu vorgesehen, ein Werkzeug in einer Werkzeugaufnahme zu befestigen, insbesondere mittels eines Einschrumpfens, und/oder aus der Werkzeugaufnahme zu entfernen, insbesondere mittels eines Ausschrumpfens. Vorzugsweise weist die Schrumpfspannstation zumindest eine Induktionsheizeinheit zum Aufheizen eines eine Werkzeugaufnahmeöffnung umgebenden Werkzeugaufnahmebereichs einer Werkzeugaufnahme auf. Die Schrumpfspannstation ist insbesondere dazu vorgesehen, bei einem Einschrumpfen die Werkzeugaufnahmeöffnung der Werkzeugaufnahme thermisch aufzuweiten, um eine Größe, insbesondere einen Durchmesser, der Werkzeugaufnahmeöffnung so zu vergrößern, dass ein Werkzeug in die Werkzeugaufnahmeöffnung hineinpasst. Vorzugsweise mittels eines anschließenden Abkühlens der Werkzeugaufnahme verringert sich die Größe, insbesondere der Durchmesser, der Werkzeugaufnahmeöffnung wieder und erzeugt somit einen Kraftschluss zwischen der Werkzeugaufnahme und dem Werkzeug. Vorzugsweise weist die Schrumpfspannstation zumindest eine Kühlstation auf. Die Kühlstation ist zumindest dazu vorgesehen, die Werkzeugaufnahme, insbesondere im Anschluss an eine Erhitzung mittels der Induktionsheizeinheit, vorzugsweise auf eine handwarme Temperatur, abzukühlen. Insbesondere ist der Handhabungsroboter dazu vorgesehen, die Schrumpfspannstation zu bestücken, d.h. insbesondere Werkzeuge und/oder Werkzeugaufnahmen in die Schrumpfspannstation einzusetzen und/oder aus der Schrumpfspannstation zu entnehmen.

Außerdem wird vorgeschlagen, dass die Schrumpfspannstation, insbesondere die Heizstation, eine Werkzeugaufnahmeerkennungseinheit aufweist, welche dazu vorgesehen ist, Werkzeugaufnahmen, welche nicht als Schrumpfspannfutter ausgebildet sind, automatisiert zu erkennen und zu verhindern, dass die nicht als Schrumpfspannfutter ausgebildeten Werkzeugaufnahmen in die Schrumpfspannstation eingesetzt werden. Dadurch kann vorteilhaft eine besonders hohe Betriebssicherheit erreicht werden. Beispielsweise kann ein fälschlicherweise in die Heizstation eigesetztes Hydrodehn-Spannfutter bei einem Erhitzen explodieren und dadurch Beschädigungen und Verletzungen hervorrufen, was vorteilhaft mittels einer Erkennung des Werkzeugaufnahmetyps im Vorfeld des Erhitzens verhindert werden kann. Die Werkzeugaufnahmeerkennungseinheit ist insbesondere zumindest teilweise einstückig mit einer, einer Schleuseneinheit der Multispann- und Mess- und/oder Einstellstation zugeordneten Erkennungseinheit der Multispann- und Mess- und/oder Einstellstation ausgebildet oder als von der Erkennungseinheit separate Einheit mit separaten Erkennungsmitteln ausgebildet. Die Erkennungsmittel können insbesondere als ein Kamerasystem mit einer Werkzeugaufnahmeerkennung, als ein NFC-Transpondersystem, wie beispielsweise ein RFID-Transpondersystem, insbesondere mit einem RFID Lesegerät an der Schrumpfspannstation und einem RFID-Tag an den Werkzeugaufnahmen und/oder als ein QR-Code- oder Strichcodesystem, insbesondere mit einem QR-Code-Lesegerät oder einem Strichcode-Lesegerät an der Schrumpfspannstation und einem QR-Code oder einem Strichcode an den Werkzeugaufnahmen ausgebildet sein. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente, insbesondere Erkennungsmittel, aufweisen, die Bestandteil, insbesondere funktionell wichtiger Bestandteil, beider Einheiten sind.

Zusätzlich wird vorgeschlagen, dass die Schrumpfspannstation die Kühlstation umfasst, welche dazu vorgesehen ist, eine Mehrzahl an Werkzeugaufnahmen, insbesondere Schrumpfspannfuttern, gleichzeitig zu kühlen. Dadurch kann vorteilhaft eine besonders hohe Flexibilität erreicht werden, insbesondere indem verschiedenartige und/oder verschieden geformte Schrumpfspannfutter effektiv gekühlt werden können. Zudem kann vorteilhaft eine hohe Arbeitsgeschwindigkeit erzielt werden, insbesondere da ein Kühlvorgang in der Regel länger dauert als ein Heizvorgang und somit bereits ein weiteres Schrumpfspannfutter aufgeheizt werden kann, während der oder die vorangegangenen Schrumpfspannfutter noch in der Abkühlphase sind. Die Kühlstation bildet insbesondere einen Teil desselben Moduls aus wie die Schrumpfspannstation. Bevorzugt bildet die Kühlstation jedoch ein eigenes, insbesondere von der Schrumpfspannstation separates, Modul aus. Insbesondere ist die Kühlstation zu einer aktiven Kühlung von Werkzeugeinheiten vorgesehen. Insbesondere umfasst die Kühlstation eine Mehrzahl an Kühlplätzen, welche jeweils für eine aktive Kühlung genau einer Werkzeugeinheit vorgesehen sind. Insbesondere umfasst die Kühlstation eine Mehrzahl an Kühlmanschetten, welche zu einer Kühlung jeweils auf eine aufgeheizte Werkzeugeinheit aufgesetzt werden. Insbesondere ist der Handhabungsroboter dazu vorgesehen, die Kühlstation zu bestücken, d.h. insbesondere Werkzeugeinheiten und/oder Werkzeugaufnahmen in die Kühlstation einzusetzen und/oder aus der Kühlstation zu entnehmen. Zudem ist der Handhabungsroboter insbesondere dazu vorgesehen, Kühlmanschetten aufzunehmen, zu bewegen und abzusetzen. Vorzugsweise ist der Handhabungsroboter dazu vorgesehen, Kühlmanschetten auf Werkzeugaufnahmen und/oder auf Werkzeugeinheiten aufzusetzen und/oder Kühlmanschetten von Werkzeugaufnahmen und/oder Werkzeugeinheiten abzunehmen.

Zudem wird vorgeschlagen, dass die Schrumpfspannstation eine Kühlstation und eine Heizstation umfasst, welche als voneinander getrennte, insbesondere als an beliebigen Modulplätzen innerhalb eines Gehäuses der Multispann- und Mess- und/oder Einstellstation anordenbare, Module ausgebildet sind. Dadurch kann vorteilhaft eine Flexibilität und/oder eine Arbeitsgeschwindigkeit weiter erhöht werden. Insbesondere umfasst die Multispann- und Mess- und/oder Einstellstation zumindest 8, vorzugsweise zumindest 12, bevorzugt zumindest 16 und besonders bevorzugt höchstens 20 Modulplätze. Alternativ kann die Kühlstation und die Heizstation ein gemeinsames, einzelnes Modul, welches insbesondere höchstens einen Modulplatz einnimmt, ausbilden. Dabei ist insbesondere eine Kühleinheit der Kühlstation und eine Heizeinheit der Heizstation in einer gemeinsamen Baueinheit kombiniert, welche insbesondere nur gemeinsam bewegbar ausgebildet ist, wie es insbesondere in der deutschen Patentanmeldung mit der Anmeldenummer 10 2019 108 605.1 beschrieben ist. Insbesondere wird die Offenbarung der deutschen Patentanmeldung 10 2019 108 605.1 durch Bezugnahme in die vorliegende Patentanmeldung übernommen, vorzugsweise mit Ausnahme etwaiger Definitionen, Ausschlüsse und/oder Inkonsistenzen.

Außerdem wird vorgeschlagen, dass zumindest eine Werkzeugeinspanneinheit als eine Pressspannstation, insbesondere als eine powRgrip^{®}-Spannstation, ausgebildet ist, welche zumindest dazu vorgesehen ist, Werkzeuge mittels eines Verpressens von Werkzeugaufnahmen in die Werkzeugaufnahmen zu montieren. Dadurch kann vorteilhaft eine hohe Flexibilität erreicht werden, insbesondere indem zumindest ein Pressspannen von Werkzeugen in Werkzeugaufnahmen, insbesondere in powRgrip^{®}-Werkzeugaufnahmen, durch die Multispann- und Mess- und/oder Einstellstation, vorzugsweise in Kombination mit einem Einstellen und/oder Vermessen der hergestellten Werkzeugeinheiten, ermöglicht werden kann, bevorzugt als eine von mehreren unterschiedlichen durch die Multispann- und Mess- und/oder Einstellstation bewältigbaren Spannmethoden. Insbesondere ist die Pressspannstation dazu vorgesehen, eine Spannzange einer Werkzeugaufnahme, insbesondere eine powRgrip^{®}-Spannzange einer powRgrip^{®}-Werkzeugaufnahme, in einen Spannzangenhalter der Werkzeugaufnahme, insbesondere einen powRgrip^{®}-Spannzangenhalter der powRgrip^{®}-Werkzeugaufnahme, einzupressen, insbesondere während ein Schaftwerkzeug in dem Spannzangenhalter angeordnet ist. Insbesondere ist der Handhabungsroboter dazu vorgesehen, die Werkzeugaufnahme, insbesondere die Spannzange und den Spannzangenhalter der Werkzeugaufnahme, in die Pressspannstation einzusetzen. Insbesondere ist der Handhabungsroboter dazu vorgesehen, das Werkzeug in die in der Pressspannstation angeordnete Spannzange einzuführen. Insbesondere ist der Handhabungsroboter dazu vorgesehen, die Pressspannstation zu einer Ermöglichung einer Durchführung des Spannvorgangs zu schließen und/oder zu einer Entnahme der montierten Werkzeugeinheit oder der demontierten Werkzeugaufnahme zu öffnen. Insbesondere ist der Handhabungsroboter dazu vorgesehen, die montierte Werkzeugeinheit und/oder die demontierte Werkzeugaufnahme aus der Pressspannstation zu entnehmen. Insbesondere ist der Handhabungsroboter dazu vorgesehen, einen zu einer bestimmten Werkzeugaufnahme passenden Pressadapter der Pressspannstation auszuwählen und vor einem Ein- oder Ausspannvorgang in der Pressspannstation zu montieren. Die Pressspannstation ist insbesondere als eine "Automatische Spanneinheit PGU" der Firma Rego-Fix AG, Tenniken (CH) ausgebildet.

Außerdem wird vorgeschlagen, dass die Pressspannstation in Wechselwirkung mit dem Mess- und/oder Einstellgerät dazu vorgesehen ist, ein Werkzeug in einer powRgrip^{®}-Werkzeugaufnahme auf Länge einzustellen. Dadurch kann vorteilhaft eine hohe Flexibilität erreicht werden. Dazu wird insbesondere zunächst die Werkzeugaufnahme, insbesondere die powRgrip^{®}-Werkzeugaufnahme mit der Spannzange, insbesondere der powRgrip^{®}-Spannzange, mit dem Spannzangenhalter, insbesondere dem powRgrip^{®}-Spannzangenhalter, und mit dem in die Werkzeugaufnahme eingesetzten Werkzeug in das Mess- und/oder Einstellgerät eingesetzt und dort mittels eines Längeneinstellpins des Mess- und/oder Einstellgeräts und mittels einer Optikeinheit des Mess- und/oder Einstellgeräts, insbesondere eines Kamerasystems des Mess- und/oder Einstellgeräts, auf eine Solllänge eingestellt. Anschließend wird insbesondere die auf Länge eingestellte Werkzeugeinheit aus Spannzange, Spannzangenhalter und Werkzeug an die Pressspannstation übergeben und in der eingestellten Position durch die Pressspannstation fixiert. In einem weiteren Schritt wird insbesondere die Längeneinstellung im Anschluss an die Fixierung durch die Pressspannstation mittels des Mess- und/oder Einstellgeräts kontrolliert. Insbesondere wenn die Längeneinstellung der fixierten Werkzeugeinheit von der voreingestellten Längeneinstellung der Werkzeugeinheit vor der Fixierung abweicht, wird die Werkzeugeinheit erneut demontiert und der Vorgang wiederholt.

Zusätzlich wird vorgeschlagen, dass zumindest eine Werkzeugeinspanneinheit als eine Hydrodehn-Schraubstation ausgebildet ist, welche insbesondere dazu vorgesehen ist, Werkzeuge mittels eines Anziehens/Lösens einer Spannschraube eines Hydrodehnspannfutters in/aus dem Hydrodehnspannfutter zu montieren/demontieren. Dadurch kann vorteilhaft eine hohe Flexibilität erreicht werden, insbesondere indem zumindest ein Ein- und/oder Ausspannen von Werkzeugen in Hydrodehnspannfutter durch die Multispann- und Mess- und/oder Einstellstation, vorzugsweise in Kombination mit einem Einstellen und/oder Vermessen der hergestellten Werkzeugeinheiten, ermöglicht werden kann, bevorzugt als eine von mehreren unterschiedlichen durch die Multispann- und Mess- und/oder Einstellstation bewältigbaren Spannmethoden. Insbesondere ist die Hydrodehn-Schraubstation dazu vorgesehen, verschiedene Spannschrauben verschiedener Hydrodehnspannfutter zu betätigen. Insbesondere ist die Hydrodehn-Schraubstation zumindest teilweise einstückig mit dem Mess- und/oder Einstellgerät ausgebildet. Insbesondere ist die Hydrodehn-Schraubstation an dem Mess- und/oder Einstellgerät montiert. Insbesondere besetzen die Hydrodehn-Schraubstation und das Mess- und/oder Einstellgerät einen einzigen, insbesondere einen identischen, Modulplatz. Insbesondere ist die Hydrodehn-Schraubstation dazu vorgesehen eine Werkzeugaufnahme zu manipulieren, welche in eine Haltevorrichtung des Mess- und/oder Einstellgeräts eingesetzt und/oder in dieser fixiert ist.

Wenn die Hydrodehn-Schraubstation ein Schraubkopfmagazin aufweist, welches eine Mehrzahl unterschiedlich geformter und/oder unterschiedlich großer Schraubköpfe umfasst, wobei die Hydrodehn-Schraubstation dazu vorgesehen ist, einen automatisierten Wechsel des aktiven Schraubkopfes vorzunehmen, kann vorteilhaft eine hohe Flexibilität erreicht werden, insbesondere indem verschiedene Spannschrauben verschiedener Hydrodehnspannfutter betätigt, d.h. insbesondere gespannt oder gelöst werden können. Insbesondere ist der Handhabungsroboter dazu vorgesehen, das Hydrodehnspannfutter und/oder das Werkzeug in die Hydrodehn-Schraubstation einzusetzen und/oder aus der Hydrodehn-Schraubstation zu entnehmen. Insbesondere ist der Handhabungsroboter dazu vorgesehen, die Spannschraube des Hydrodehnspannfutters festzuziehen oder zu lösen. Insbesondere ist der Handhabungsroboter dazu vorgesehen, einen Schraubkopf aus dem Schraubkopfmagazin zu entnehmen und/oder in das Schraubkopfmagazin einzusetzen. Insbesondere ist der Handhabungsroboter dazu vorgesehen, einen Schraubkopf der Hydrodehn-Schraubstation auszuwechseln. Alternativ kann der Handhabungsroboter dazu vorgesehen sein, direkt die Spannschraube zu betätigen, d.h. einen Schraubkopf zu einem Spannen oder einem Lösen der Spannschraube zu betätigen. Vorzugsweise ist jedoch eine Schraubeinheit, welche dazu vorgesehen ist, eine Rotation des Schraubkopfs zu einer Betätigung der Spannschraube zu erzeugen, getrennt von dem Handhabungsroboter ausgebildet. Unter einem "aktiven Schraubkopf" soll insbesondere der jeweilige in der Hydrodehn-Schraubstation befestigte Schraubkopf, welcher aktuell durch die Hydrodehn-Schraubstation rotierbar ist, und sich somit insbesondere außerhalb des Schraubkopfmagazins befindet, verstanden werden. Insbesondere ist das Schraubkopfmagazin an dem Mess- und/oder Einstellgerät befestigt.

Weiterhin wird vorgeschlagen, dass zumindest eine Werkzeugeinspanneinheit als eine Überwurfmutter-Schraubstation ausgebildet ist, welche dazu vorgesehen ist, Werkzeuge mittels eines Anziehens/Lösens einer Überwurfmutter in/aus einer Werkzeugaufnahme zu montieren/demontieren. Dadurch kann vorteilhaft eine hohe Flexibilität erreicht werden, insbesondere indem zumindest ein Ein- und/oder Ausspannen von Werkzeugen in Spannfuttern mit Überwurfmuttern durch die Multispann- und Mess- und/oder Einstellstation, vorzugsweise in Kombination mit einem Einstellen und/oder Vermessen der hergestellten Werkzeugeinheiten, ermöglicht werden kann, bevorzugt als eine von mehreren unterschiedlichen durch die Multispann- und Mess- und/oder Einstellstation bewältigbaren Spannmethoden. Insbesondere umfasst ein durch die Überwurfmutter-Schraubstation spannbares Spannfutter eine Überwurfmutter, welche insbesondere zu einem Einspannen eines Werkzeugs über das Werkzeug gestülpt und mit einem eine Werkzeugaufnahmeöffnung aufweisenden Teil des Spannfutters, in welches das Werkzeug eingesteckt ist, verschraubt wird. Insbesondere umfasst die Überwurfmutter-Schraubstation zumindest ein Drehmomentelement, welches dazu vorgesehen ist, die Überwurfmutter zu umgreifen und durch eine Rotationsbewegung des Drehmomentelements oder des die Werkzeugaufnahmeöffnung aufweisenden Teils des Spannfutters festzuziehen und/oder zu lösen. Insbesondere ist der Handhabungsroboter dazu vorgesehen, eine Werkzeugaufnahme und/oder ein Werkzeug in die Überwurfmutter-Schraubstation einzusetzen und/oder aus der Überwurfmutter-Schraubstation zu entnehmen. Insbesondere ist der Handhabungsroboter dazu vorgesehen, eine Überwurfmutter von der Werkzeugaufnahme abzunehmen oder auf die Werkzeugaufnahme aufzusetzen. Insbesondere ist der Handhabungsroboter dazu vorgesehen, das Drehmomentelement an die Überwurfmutter anzulegen und/oder von der Überwurfmutter zu entfernen.

Wenn die Überwurfmutter-Schraubstation dazu vorgesehen ist, eine werkzeugflächenlose Überwurfmutter, insbesondere eine zylindrisch geformte Überwurfmutter, vollautomatisiert festzuziehen und/oder zu lösen, kann vorteilhaft eine Flexibilität noch weiter erhöht werden. Vorteilhaft können dadurch Werkzeugfutter mit werkzeugflächenlosen Überwurfmuttern gespannt und/oder gelöst werden. Unter einer "werkzeugflächenlosen Überwurfmutter" soll insbesondere eine Überwurfmutter verstanden werden, welche an ihrem Außenumfang frei ist von vorgeformten Flächen, beispielsweise Schlüsselflächen, Kanten, Löcher, Schlitze oder dergleichen, die dazu vorgesehen sind, einen Eingriff für Werkzeuge, beispielsweise Schraubenschlüssel oder dergleichen, zu bieten. Insbesondere weist eine werkzeugflächenlose Überwurfmutter einer Werkzeugaufnahme eine im Wesentlichen glatte Oberfläche auf, welche insbesondere zu einer Optimierung eines Rundlaufs der Werkzeugaufnahme möglichst rotationssymmetrisch zu einer Rotationsachse der Werkzeugaufnahme ist. Eine beispielhafte Überwurfmutter-Schraubstation ist in der deutschen Patentanmeldung mit der Anmeldenummer 10 2018 116 263.4 beschrieben, wobei insbesondere die Offenbarung der deutschen Patentanmeldung 10 2018 116 263.4 durch Bezugnahme in die vorliegende Patentanmeldung übernommen wird, vorzugsweise mit Ausnahme etwaiger Definitionen, Ausschlüsse und/oder Inkonsistenzen.

Ferner wird vorgeschlagen, dass die Multispann- und Mess- und/oder Einstellstation zumindest eine Reinigungsstation aufweist, welche dazu vorgesehen ist, zumindest einen Teil des Werkzeugs vor einem Montieren in der Werkzeugaufnahme oder vor einem Demontieren des Werkzeugs aus der Werkzeugaufnahme zu reinigen. Dadurch kann vorteilhaft eine Flexibilität weiter erhöht werden, beispielsweise dadurch, dass auch verschmutzte Werkzeugeinheiten in der Multispann- und Mess- und/oder Einstellstation demontiert werden können. Zudem kann dadurch vorteilhaft eine besonders hohe Genauigkeit einer Einstellung und/oder Vermessung erreicht werden. Außerdem kann eine besonders hohe Betriebssicherheit erreicht werden. Insbesondere ist der Handhabungsroboter dazu vorgesehen, Werkzeuge und/oder Werkzeugeinheiten in die Reinigungsstation einzusetzen und/oder aus der Reinigungsstation zu entnehmen. Insbesondere umfasst die Reinigungsstation zumindest eine Wasserdampf-Sprühdüse, welche vorzugsweise dazu vorgesehen ist, das Werkzeug und/oder die Werkzeugaufnahme, bevorzugt zumindest eine Schneide eines Werkzeugs, zu einer Reinigung mit Wasserdampf zu besprühen. Alternativ oder zusätzlich umfasst die Reinigungsstation eine Tupfvorrichtung, welche dazu vorgesehen ist, das Werkzeug und/oder die Werkzeugaufnahme, bevorzugt zumindest eine Schneide eines Werkzeugs, zu einer Reinigung, insbesondere mit einem adhäsiven Material, abzutupfen. Eine derartige Tupfvorrichtung ist zum Beispiel in der deutschen Patentanmeldung mit der Anmeldenummer 10 2018 113 704.4 beschrieben.

Wenn das Mess- und/oder Einstellgerät zumindest dazu vorgesehen ist, eine Reinheit eines in der Reinigungsstation gereinigten Teils eines Werkzeugs optisch zu überprüfen, kann eine besonders hohe Messgenauigkeit und/oder eine besonders hohe Einstellgenauigkeit erreicht werden. Insbesondere ist das Mess- und/oder Einstellgerät dazu vorgesehen, eine Werkzeugeinheit und/oder ein Werkzeug vor und nach einer Reinigung durch die Reinigungsstation optisch zu überprüfen. Unter einem "optischen Überprüfen" soll insbesondere ein Vergleich von Bildaufnahmen eines optischen Sensorsystems, beispielsweise einer Kamera, verstanden werden. Insbesondere ist die Reinigungsstation dazu vorgesehen, im Fall einer Feststellung einer unzureichenden Reinheit den Reinigungsvorgang zu wiederholen.

Des Weiteren wird vorgeschlagen, dass die Multispann- und Mess- und/oder Einstellstation zumindest eine Wuchtstation aufweist, welche dazu vorgesehen ist, insbesondere mittels eines Rotierens eines in einer der Werkzeugeinspanneinheiten mit einer Werkzeugaufnahme montierten Werkzeugs, eine Unwucht einer Kombination aus Werkzeug und Werkzeugaufnahme, insbesondere einer Werkzeugeinheit, zu bestimmen. Dadurch kann vorteilhaft eine hohe Wuchtgüte und/oder eine hohe Einspanngenauigkeit erreicht werden. Insbesondere kann eine hohe Präzision, d.h. zum Beispiel eine hohe Bearbeitungsgenauigkeit, der fertig eingespannten Werkzeugeinheiten erreicht werden. Vorteilhaft kann durch eine hohe Wuchtgüte eine Standzeit einer Werkzeugeinheit erhöht werden und/oder eine Werkzeugmaschine, insbesondere eine Spindel einer Werkzeugmaschine geschont werden. Insbesondere ist der Handhabungsroboter dazu vorgesehen, eine fertig montierte Werkzeugeinheit in die Wuchtstation einzusetzen und/oder aus der Wuchtstation zu entnehmen. Insbesondere ist die Multispann- und Mess- und/oder Einstellstation dazu vorgesehen, im Fall eines Überschreitens einer Toleranzunwucht eine betreffende Werkzeugeinheit in der jeweils passenden Werkzeugeinspanneinheit zu demontieren und erneut zu montieren, wobei vorzugsweise anschließend eine Unwucht der erneut montierten Werkzeugeinheit erneut vermessen wird. Insbesondere im Fall einer daran anschließenden Unterschreitung der Toleranzunwucht wird die Werkzeugeinheit von der Multispann- und Mess- und/oder Einstellstation für eine weitere Verwendung freigegeben. Insbesondere im Fall einer daran anschließenden erneuten Überschreitung der Toleranzunwucht wird die Werkzeugeinheit von der Multispann- und Mess- und/oder Einstellstation erneut demontiert und wieder zusammengebaut oder aussortiert. Insbesondere werden Werkzeugeinheiten und/oder Werkzeugaufnahmen mit unzureichender Wuchtgüte und/oder mit unzureichenden oder ungenügenden durch das Mess- und/oder Einstellgerät bestimmten Messdaten markiert, beispielsweise in einer Betriebssoftware der Multispann- und Mess- und/oder Einstellstation oder auf einem der Werkzeugaufnahme zugeordneten Chip, und ausgeschleust. Alternativ oder zusätzlich kann bei einer mehrfachen Überschreitung der Toleranzunwucht einer Werkzeugeinheit jeweils das Werkzeug / die Werkzeugaufnahme der betroffenen Werkzeugeinheit mit einer anderen Werkzeugaufnahme / einem anderen Werkzeug zur Bestimmung der Ursache der Unwucht kombiniert werden.

Außerdem wird vorgeschlagen, dass das Mess- und/oder Einstellgerät ein Vorsatzhaltermagazin zu einer Bereitstellung einer Mehrzahl unterschiedlicher Vorsatzhalter aufweist. Dadurch kann vorteilhaft eine Flexibilität weiter erhöht werden, insbesondere indem verschiedene Arten von Werkzeugaufnahmen, vorzugsweise verschieden geformte Werkzeugaufnahmen, von einem einzelnen Mess- und/oder Einstellgerät vermessen und/oder eingestellt werden können. Insbesondere ist ein Vorsatzhalter dazu vorgesehen, eine Werkzeugaufnahme relativ zu einer Messvorrichtung und/oder relativ zu einer Einstellvorrichtung des Mess- und/oder Einstellgeräts in dem Mess- und/oder Einstellgerät, vorzugsweise orts- und/oder rotationsfest, zu lagern. Insbesondere sind die unterschiedlichen Vorsatzhalter zu einer Halterung unterschiedlich geformter Werkzeugaufnahmen vorgesehen. Insbesondere ist der Handhabungsroboter dazu vorgesehen, einen Vorsatzhalter aus dem Mess- und/oder Einstellgerät und/oder dem Vorsatzhaltermagazin zu entnehmen und/oder in das Mess- und/oder Einstellgerät und/oder das Vorsatzhaltermagazin einzusetzen. Insbesondere ist das Vorsatzhaltermagazin innerhalb des Gehäuses angeordnet, wodurch der Handhabungsroboter dauerhaften Zugriff auf alle verfügbaren Vorsatzhalter erhält. Alternativ ist denkbar, dass das Vorsatzhaltermagazin außerhalb des Gehäuses angeordnet ist und verschiedene Vorsatzhalter über die Schleuseneinheit dem Handhabungsroboter zugeführt werden können.

Wenn die Multispann- und Mess- und/oder Einstellstation eine Werkzeugmontagestation aufweist, welche dazu vorgesehen ist, aus mehreren Teilen und/oder Modulen bestehende Werkzeuge zu montieren und/oder zu demontieren, kann vorteilhaft eine besonders hohe Flexibilität erreicht werden. Beispielsweise kann die Werkzeugmontagestation dazu vorgesehen sein, Werkzeuge mit Wendeplatten zu bestücken und/oder Werkzeugverlängerungen zu montieren.

Ferner wird vorgeschlagen, dass die Multispann- und Mess- und/oder Einstellstation die Erkennungseinheit aufweist, welche dazu vorgesehen ist, eine Werkzeugaufnahme zu erkennen sowie eine Steuer- und/oder Regeleinheit aufweist, welche dazu vorgesehen ist, auf Grundlage der durch die Erkennungseinheit ermittelten Daten zumindest eine Werkzeugeinspanneinheit vorzubereiten und anschließend den Handhabungsroboter dazu zu veranlassen, die Werkzeugaufnahme der vorbereiteten Werkzeugeinspanneinheit zu einer Montage/Demontage eines Werkzeugs in/aus die/der Werkzeugaufnahme zuzuführen. Dadurch kann vorteilhaft ein besonders hoher Automatisierungsgrad erreicht werden. Vorteilhaft kann eine besonders hohe Benutzerfreundlichkeit erreicht werden. Zudem kann vorteilhaft eine hohe Betriebssicherheit erreicht werden, da mit der Konfiguration der Multispann- und Mess- und/oder Einstellstation inkompatible Werkzeuge und/oder Werkzeugaufnahmen frühzeitig aussortiert werden können. Unter einem "Vorbereiten einer Werkzeugeinspanneinheit" soll insbesondere ein Einsetzen eines zu der jeweiligen Werkzeugaufnahme passenden und für die ordnungsgemäße Funktionsfähigkeit der Werkzeugeinspanneinheit notwendigen Adapters, beispielsweise Schraubkopfs, Drehmomentelements, Pressadapters, Spannzange oder dergleichen, verstanden werden. Die Erkennungseinheit ist insbesondere als ein Kamerasystem mit einer Werkzeug- und/oder Werkzeugaufnahmeerkennung, als ein NFC-Transpondersystem, wie beispielsweise ein RFID-Transpondersystem, insbesondere mit einem RFID Lesegerät an der Schleuseneinheit des Gehäuses und einem RFID-Tag an den Werkzeugaufnahmen und/oder an den Werkzeugen und/oder als ein QR-Code- oder Strichcodesystem, insbesondere mit einem QR-Code-Lesegerät oder einem Strichcode-Lesegerät an der Schleuseneinheit des Gehäuses und einem QR-Code oder einem Strichcode an den Werkzeugaufnahmen und/oder an den Werkzeugen, ausgebildet. Alternativ ist denkbar, dass das QR-Code- oder Strichcodesystem frei ist von einem separaten QR-Code-Lesegerät oder einem Strichcode-Lesegerät an der Schleuseneinheit und die QR-Codes oder Strichcodes von einem Kamerasystem des Mess- und/oder Einstellgeräts ausgelesen werden. Dazu ist insbesondere der Handhabungsroboter dazu vorgesehen, das Werkzeug und/oder die Werkzeugaufnahme mit dem QR-Code oder dem Strichcode in einem Blickfeld des Kamerasystems des Mess- und/oder Einstellgeräts zu positionieren. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Zudem wird vorgeschlagen, dass das Gehäuse zumindest die Schleuseneinheit aufweist, welche zu einem Be- und/oder Entladen von Werkzeugen und/oder Werkzeugaufnahmen vorgesehen ist, wobei die Schleuseneinheit zumindest eine Signalvorrichtung umfasst, die dazu vorgesehen ist, zumindest ein Signal an einen Bediener auszugeben, anhand dessen erkennbar ist, ob in der Schleuseneinheit befindliche, fertig montierte Kombinationen aus Werkzeug und Werkzeugaufnahme, insbesondere Werkzeugeinheiten, ordnungsgemäß montiert sind. Dadurch kann vorteilhaft eine besonders hohe Benutzerfreundlichkeit erreicht werden. Zudem kann vorteilhaft eine hohe Betriebssicherheit erreicht werden, insbesondere indem eine Weiterverwendung fehlerhafter oder fehlerhaft montierter Werkzeugeinheiten unterbunden werden kann. Die Schleuseneinheit ist insbesondere als eine verschließbare Öffnung in dem Gehäuse ausgebildet. Die Schleuseneinheit dient insbesondere als ein Übergabebereich zu einer Übergabe von Werkzeugen und Werkzeugaufnahmen an den Handhabungsroboter. Der Handhabungsroboter ist dazu vorgesehen, Werkzeuge und/oder Werkzeugaufnahmen aus der Schleuseneinheit zu entnehmen oder in die Schleuseneinheit abzulegen. Insbesondere ist ein Zugriff des Handhabungsroboters auf die Schleuseneinheit unterbunden solange die Schleuseneinheit zu einer Bedienerseite hin, d.h. auf einer Außenseite des Gehäuses, geöffnet ist. Die Signalvorrichtung ist insbesondere als eine akustische Signalvorrichtung und bevorzugt als eine optische Signalvorrichtung ausgebildet.

Wenn die Signalvorrichtung als eine Leuchteneinheit ausgebildet ist, welche dazu vorgesehen ist, Leuchtsignale in zumindest zwei verschiedenen Lichtfarben auszugeben, kann vorteilhaft eine Bedienerfreundlichkeit weiter erhöht werden, insbesondere durch eine besonders einfache Erkennbarkeit eines signalisierten Zustands. Alternativ oder zusätzlich kann die Signalvorrichtung dazu vorgesehen sein, einen Betriebszustand (beispielsweise "eingeschaltet", "Standby", "betriebsbereit", "Störung", "Betrieb läuft", "Auftrag abgeschlossen") der Multispann- und Mess- und/oder Einstellstation anzuzeigen.

Zusätzlich wird ein Verfahren zu einer Montage/Demontage eines Werkzeugs in/aus einer Werkzeugaufnahme mit einer Multispann- und Mess- und/oder Einstellstation vorgeschlagen, welches vorteilhaft eine besonders hohe Flexibilität bereitstellt.

In dem Verfahren wird eine Werkzeugaufnahme zumindest teilautomatisiert erkannt und anschließend vollautomatisiert einer passenden Werkzeugeinspanneinheit aus einer Mehrzahl an Werkzeugeinspanneinheiten zugeführt. Hierdurch werden vorteilhaft eine besonders hohe Bedienerfreundlichkeit erreicht und/oder Fehlbedienungen vorteilhaft unterbunden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: ein beispielhaftes Werkzeug und eine beispielhafte Werkzeugaufnahme,
- Fig. 2: eine schematische perspektivische Außenansicht auf eine Multispann- und Mess- und/oder Einstellstation,
- Fig. 3: eine schematische Ansicht der Multispann- und Mess- und/oder Einstellstation mit einer Anordnung der einzelnen Komponenten, insbesondere Werkzeugspanneinheiten, Handhabungsroboter und Mess- und/oder Einstellgerät,
- Fig. 4: ein schematisches Ablaufdiagramm eines Reinigungsverfahrens der Multispann- und Mess- und/oder Einstellstation,
- Fig. 5: ein schematisches Ablaufdiagramm eines Wuchtverfahrens der Multispann- und Mess- und/oder Einstellstation,
- Fig. 6: eine schematische Seitenansicht eines Teils der Multispann- und Mess- und/oder Einstellstation,
- Fig. 7: eine schematische perspektivische Ansicht einer als Schrumpfspannstation ausgebildeten Werkzeugeinspanneinheit der Multispann- und Mess- und/oder Einstellstation,
- Fig. 8: eine schematische perspektivische Ansicht einer Kühlstation der Schrumpfspannstation,
- Fig. 9: eine schematische perspektivische Ansicht einer als Pressspannstation ausgebildeten Werkzeugeinspanneinheit der Multispann- und Mess- und/oder Einstellstation,
- Fig. 10: ein schematisches Ablaufdiagramm eines Pressspannvorgangs der Pressspannstation,
- Fig. 11: eine schematische perspektivische Ansicht eines Teils einer als Hydrodehn-Schraubstation ausgebildeten Werkzeugeinspanneinheit der Multispann- und Mess- und/oder Einstellstation,
- Fig. 12: ein schematisches Ablaufdiagramm eines Ein- und Ausspannverfahrens der Hydrodehn-Schraubstation,
- Fig. 13: eine schematische perspektivische Ansicht einer als Überwurfmutter-Schraubstation ausgebildeten Werkzeugeinspanneinheit der Multispann- und Mess- und/oder Einstellstation,
- Fig. 14: eine schematische perspektivische Ansicht eines Mess- und/oder Einstellgeräts der Multispann- und Mess- und/oder Einstellstation und
- Fig. 15: ein schematisches Ablaufdiagramm eines Verfahrens zu einer Montage oder Demontage eines Werkzeugs in oder aus einer Werkzeugaufnahme.

### Beschreibung des Ausführungsbeispiels

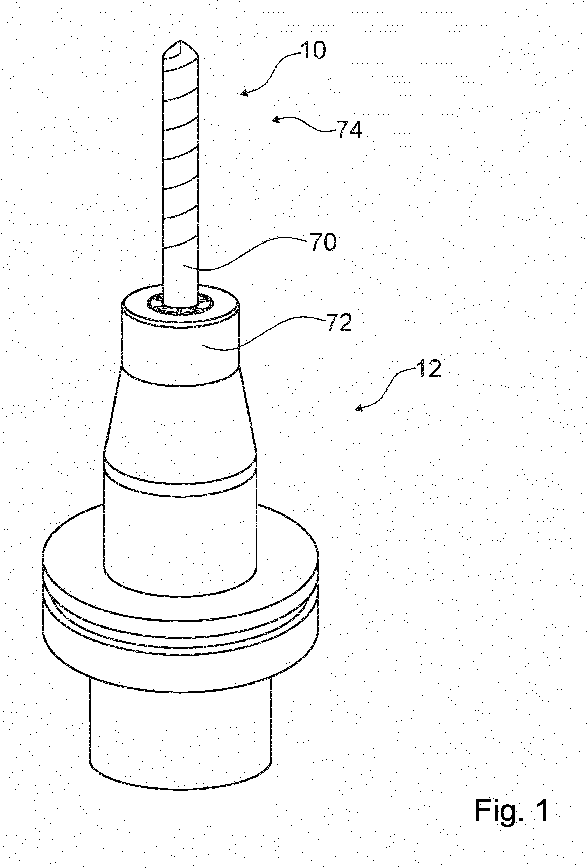

Fig. 1 zeigt ein beispielhaftes Werkzeug 10 und eine beispielhafte Werkzeugaufnahme 12. Das dargestellte Werkzeug 10 ist als ein Schaftwerkzeug, insbesondere als ein Schaftbohrer, ausgebildet. Das dargestellte Werkzeug 10 weist einen Werkzeugschaft 70 auf. Alternativ könnte das Werkzeug 10 auch als ein von einem Schaftbohrer verschiedenes Schaftwerkzeug ausgebildet sein. Die dargestellte Werkzeugaufnahme 12 ist beispielhaft als ein Werkzeugfutter mit einer Überwurfmutter 72 dargestellt, wobei die Überwurfmutter 72 insbesondere als eine werkzeugflächenlose Überwurfmutter 72 ausgebildet ist. Alternativ könnte die Werkzeugaufnahme 12 auch als eine von Werkzeugfutter mit einer Überwurfmutter 72 verschiedene Werkzeugaufnahme 12, z.B. als ein Schrumpfspannfutter, als ein Spannzangenfutter, als ein Hydrodehn-Spannfutter oder dergleichen, ausgebildet sein. Das Werkzeug 10 ist dazu vorgesehen, in der Werkzeugaufnahme 12 befestigt, insbesondere eingespannt, zu werden. Die Werkzeugaufnahme 12 und das in der Werkzeugaufnahme 12 eingespannte Werkzeug 10 bilden eine montierte Werkzeugeinheit 74 aus.

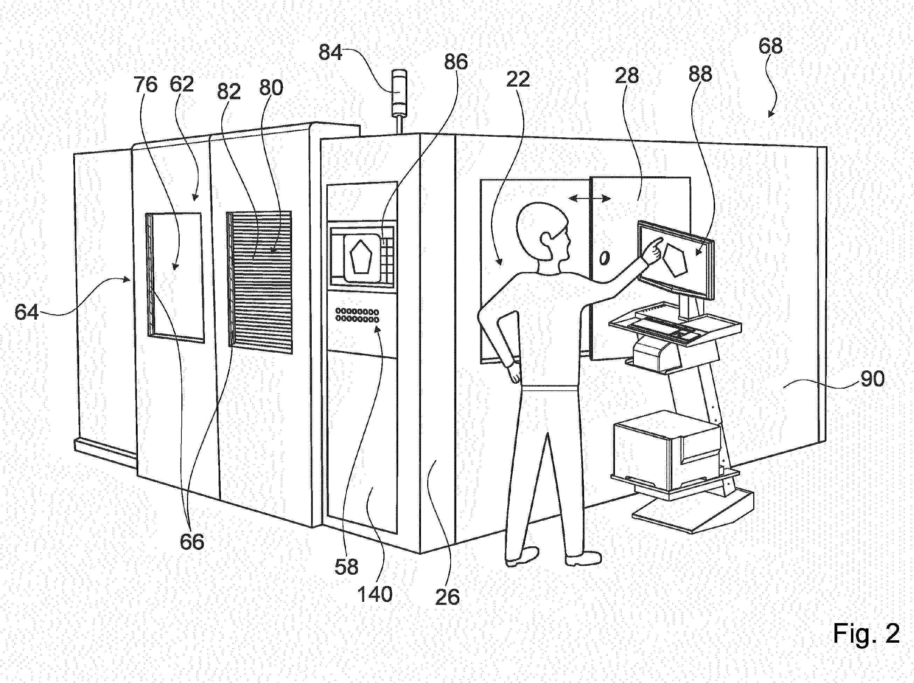

Fig. 2 zeigt eine Multispann- und Mess- und/oder Einstellstation 68 für Werkzeuge 10. Die Multispann- und Mess- und/oder Einstellstation 68 ist dazu vorgesehen, Werkzeuge 10 vollautomatisiert in Werkzeugaufnahmen 12 zu montieren. Die Multispann- und Mess- und/oder Einstellstation 68 ist dazu vorgesehen, Werkzeuge 10 vollautomatisiert aus Werkzeugaufnahmen 12 zu demontieren. Die Multispann- und Mess- und/oder Einstellstation 68 ist dazu vorgesehen, Werkzeuge 10 vollautomatisiert in die Werkzeuge 10 in den Werkzeugaufnahmen 12 einzustellen. Die Multispann- und Mess- und/oder Einstellstation 68 ist dazu vorgesehen, Werkzeuge 10 vollautomatisiert in die Werkzeuge 10 in den Werkzeugaufnahmen 12 auf Länge einzustellen. Die Multispann- und Mess- und/oder Einstellstation 68 ist dazu vorgesehen, vollautomatisiert Werkzeuge 10, Werkzeugaufnahmen 12 und/oder Werkzeugeinheiten 74 zu vermessen.

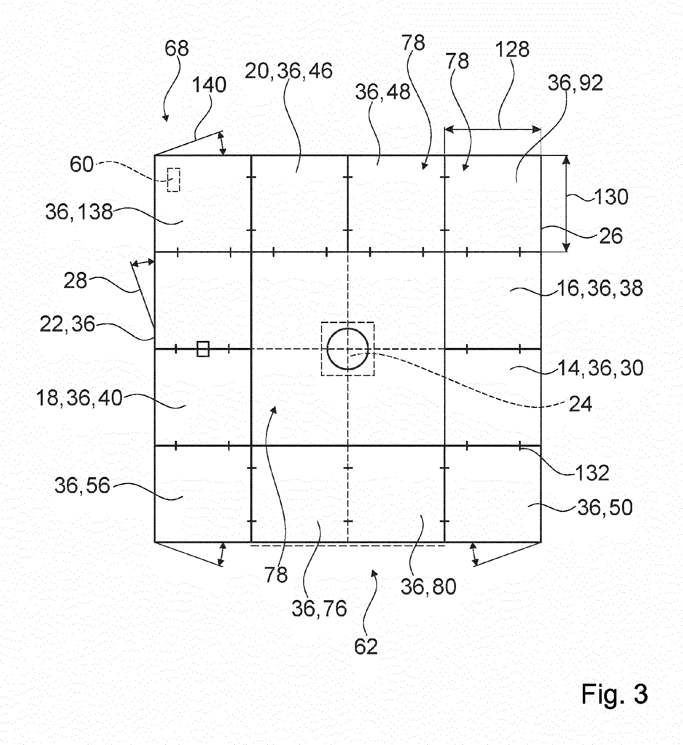

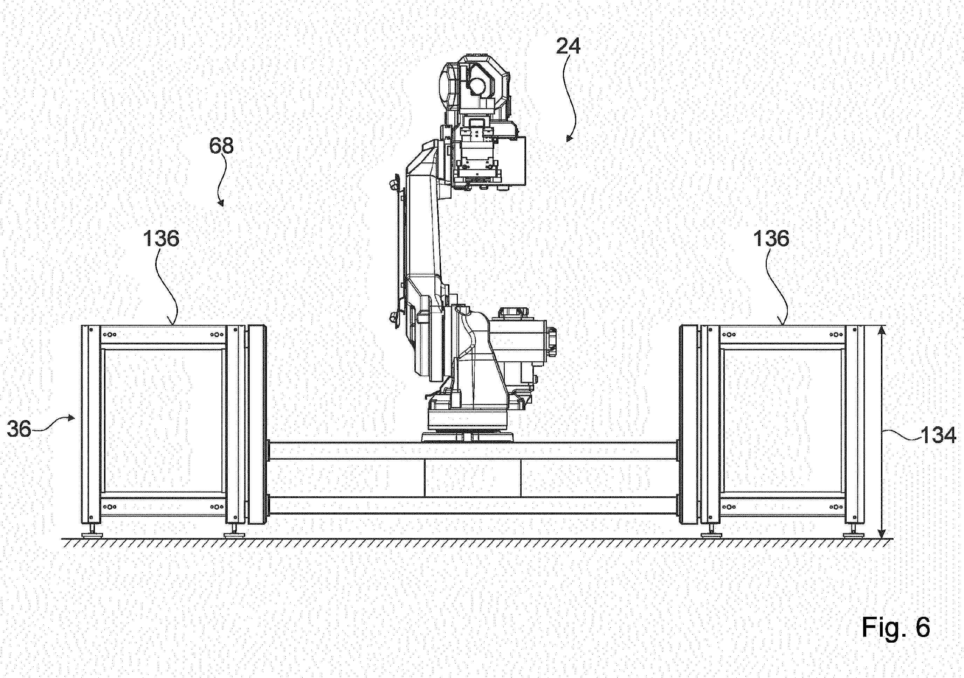

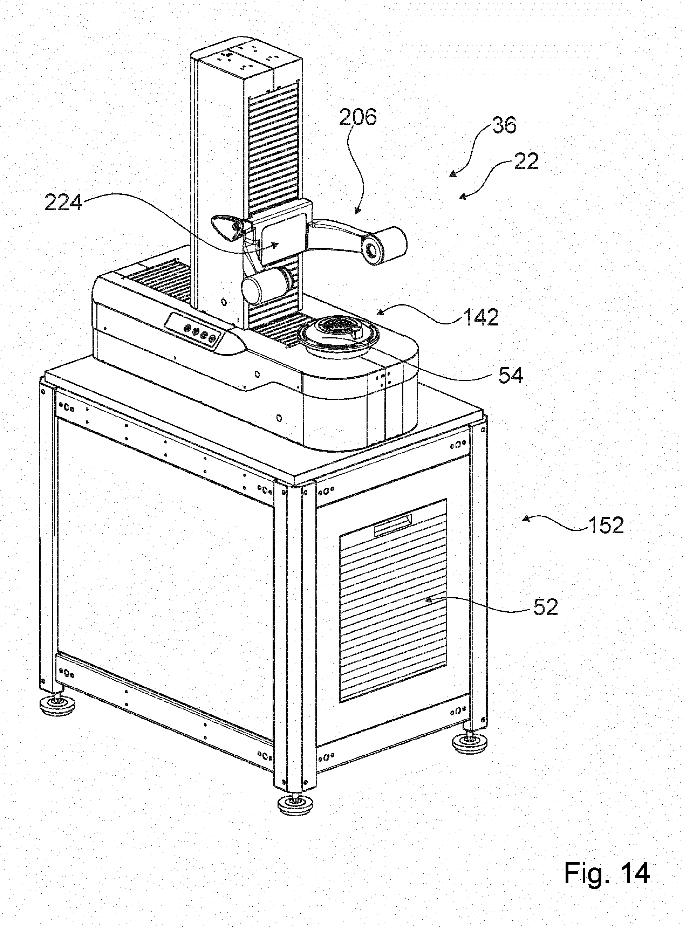

Die Multispann- und Mess- und/oder Einstellstation 68 umfasst eine Mehrzahl an vollautomatisierten Werkzeugeinspanneinheiten 14, 16, 18, 20 (vgl. auch Fig. 3 oder Figs. 7, 9, 11 und 13). Die Werkzeugeinspanneinheiten 14, 16, 18, 20 sind dazu vorgesehen, die Werkzeuge 10 zu einer Erzeugung von Werkzeugeinheiten 74 in die Werkzeugaufnahmen 12 einzuspannen. Die Werkzeugeinspanneinheiten 14, 16, 18, 20 sind dazu vorgesehen, die Werkzeuge 10 zu einem Trennen von Werkzeugeinheiten 74 aus den Werkzeugaufnahmen 12 auszuspannen. Die Multispann- und Mess- und/oder Einstellstation 68 umfasst ein optisches Mess- und/oder Einstellgerät 22 für Werkzeuge 10 (vgl. auch Fig. 3 oder Fig. 14). Das Mess- und/oder Einstellgerät 22 ist dazu vorgesehen, Werkzeuge 10 vollautomatisiert in die Werkzeuge 10 in den Werkzeugaufnahmen 12, insbesondere auf Länge, einzustellen und Werkzeuge 10 in den Werkzeugaufnahmen 12 optisch zu vermessen. Die Multispann- und Mess- und/oder Einstellstation 68 umfasst einen Handhabungsroboter 24 (vgl. auch Fig. 3 oder Fig. 6). Der Handhabungsroboter 24 ist dazu vorgesehen, Werkzeuge 10 und Werkzeugaufnahmen 12 vollautomatisiert zwischen den Werkzeugeinspanneinheiten 14, 16, 18, 20 und dem Mess- und/oder Einstellgerät 22 zu bewegen.

Die Multispann- und Mess- und/oder Einstellstation 68 weist ein Gehäuse 26 auf. Das Gehäuse 26 ist als ein gemeinsames Gehäuse 26 des Handhabungsroboters 24, der Werkzeugeinspanneinheiten 14, 16, 18, 20 und des Mess- und/oder Einstellgeräts 22 ausgebildet. Das Gehäuse 26 umschließt den Handhabungsroboter 24, die Werkzeugeinspanneinheiten 14, 16, 18, 20 und das Mess- und/oder Einstellgerät 22 zu einem Großteil, vorzugsweise vollständig. Das Gehäuse 26 ist im Wesentlichen quaderförmig ausgebildet. Das Gehäuse 26 weist eine Schleuseneinheit 62 auf. Die Schleuseneinheit 62 ist zu einem Be- und/oder Entladen von Werkzeugen 10 und/oder Werkzeugaufnahmen 12 in und/oder aus einem Inneren der Multispann- und Mess- und/oder Einstellstation 68 vorgesehen Die Schleuseneinheit 62 umfasst im dargestellten Fall zwei separate Schleusen 76, 80. Alternativ ist denkbar, dass die Schleuseneinheit 62 mehr oder weniger als zwei Schleusen 76, 80 aufweist. Die Schleusen 76, 80 sind von außen verschließbar. Im dargestellten Fall sind die Schleusen 76, 80 mittels eines rollladenartigen Verschlusselements 82 verschließbar. Alternativ ist auch vorstellbar, dass das Verschlusselement 82 als eine Klappe, als eine bodentiefe Tür, als eine Schiebetür oder als ein weiteres dem Fachmann geläufiges Verschlusselement 82 ausgebildet ist. Die Multispann- und Mess- und/oder Einstellstation 68 umfasst eine Steuer- und/oder Regeleinheit 60. Die Steuer und/oder Regeleinheit 60 ist zumindest dazu vorgesehen, das Verschlusselement 82, insbesondere einen Öffnungszustand des Verschlusselements 82, zu steuern. Die Steuer- und/oder Regeleinheit 60 ist zumindest dazu vorgesehen, einen Betrieb der Multispann- und Mess- und/oder Einstellstation 68, insbesondere der Komponenten der Multispann- und Mess- und/oder Einstellstation 68, vorzugsweise zumindest des Handhabungsroboters 24, in Abhängigkeit von dem Öffnungszustand des Verschlusselements 82 zu steuern und/oder zu regeln. Wenn eine der Schleusen 76, 80 nach außen hin geöffnet ist, unterbindet die Steuer- und/oder Regeleinheit 60 einen Zugriff des Handhabungsroboters 24 von innen auf die Schleusen 76, 80. Es ist denkbar, dass die Schleusen 76, 80 derart ausgelegt sind, dass ein Werkzeugtransportwagen direkt in die Schleuse 76, 80 hineingefahren und dort abgestellt werden kann.

Die Schleuseneinheit 62 umfasst eine Signalvorrichtung 64. Die Signalvorrichtung 64 ist dazu vorgesehen, zumindest ein Signal an einen Bediener auszugeben, anhand dessen erkennbar ist, ob in der Schleuseneinheit 62 befindliche, fertig montierte Kombinationen aus Werkzeug 10 und Werkzeugaufnahme 12, d.h. fertig montierte Werkzeugeinheiten 74, ordnungsgemäß montiert sind. Die Signalvorrichtung 64 ist als eine Leuchteneinheit 66 ausgebildet. Die Leuchteneinheit 66 ist dazu vorgesehen, Leuchtsignale in zumindest zwei verschiedenen Lichtfarben auszugeben. Die Leuchteneinheit 66 ist dazu vorgesehen, die Schleuseneinheit 62, insbesondere die Schleusen 76, 80, zumindest teilweise farblich auszuleuchten. Verschiedene durch die Leuchteneinheit 66 ausgegebene Lichtfarben sind dazu vorgesehen, verschiedene Betriebszustände der Multispann- und Mess- und/oder Einstellstation 68 oder der Schleuseneinheit 62 zu signalisieren. Beispielsweise könnte ein gelbes Licht einen Standby-Betrieb signalisieren. Beispielsweise könnte ein rotes Licht eine Störung oder ein Vorhandensein von fehlerhaft montierten Werkzeugeinheiten 74 in einer Schleuse 76, 80 signalisieren. Beispielsweise könnte ein blaues Licht einen laufenden Betreib signalisieren. Beispielsweise könnte ein grünes Licht einen abgeschlossenen Auftrag oder eine Bereitschaft einer Schleuse 76, 80 zu einer Neubestückung oder einer Entnahme von fertig montierten Werkzeugeinheiten 74 signalisieren. Zudem umfasst die Multispann- und Mess- und/oder Einstellstation 68 eine Statusleuchte 84 zur allgemeinen Signalisation des aktuellen Betriebszustands der Multispann- und Mess- und/oder Einstellstation 68 unabhängig von einem Status der Schleuseneinheit 62. Die Statusleuchte 84 ist oberhalb des Gehäuses 26 angeordnet. Alternativ kann die Statusleuchte 84 aber auch in das Gehäuse 26, insbesondere in eine Oberfläche des Gehäuses 26, integriert sein.

Die Multispann- und Mess- und/oder Einstellstation 68 weist ein Bedienpanel 86 auf. Das Bedienpanel 86 ist als ein Bildschirm, insbesondere ein Touchscreen, ausgebildet. Das Bedienpanel 86 ist dazu vorgesehen, die Multispann- und Mess- und/oder Einstellstation 68, die Komponenten der Multispann- und Mess- und/oder Einstellstation 68 und/oder die Schleuseneinheit 62 zu programmieren, zu bedienen und/oder zu überwachen. Das Bedienpanel 86 ist in das Gehäuse 26 integriert ausgebildet. Die Oberfläche des Bildschirms des Bedienpanels 86 ist im Wesentlichen flächenbündig zu der Oberfläche des Gehäuses 26 ausgebildet. Das Gehäuse 26 weist eine Klappe 28 auf. Die Klappe 28 ist von außen öffenbar. Die Klappe 28 erlaubt einen Zugang zu dem sich im Inneren des Gehäuses 26 befindlichen Mess- und/oder Einstellgerät 22. Die Klappe 28 erlaubt eine manuelle Bedienung des Mess- und/oder Einstellgeräts 22 von außerhalb des Gehäuses 26. Die Steuer- und/oder Regeleinheit 60 ist zumindest dazu vorgesehen, einen Betriebsmodus des Mess- und/oder Einstellgeräts 22 in Abhängigkeit von einem Öffnungszustand der Klappe 28 einzustellen. Bei einem Öffnen der Klappe 28 schaltet die Steuer- und/oder Regeleinheit 60 das Mess- und/oder Einstellgerät 22 in einen manuellen Betriebsmodus. Bei einem Schließen der Klappe 28 schaltet die Steuer- und/oder Regeleinheit 60 das Mess- und/oder Einstellgerät 22 in einen vollautomatischen Betriebsmodus. Wenn die Klappe 28 geöffnet ist, unterbindet die Steuer- und/oder Regeleinheit 60 zumindest einen Zugriff des Handhabungsroboters 24 von innen auf das Mess- und/oder Einstellgerät 22. Die Multispann- und Mess- und/oder Einstellstation 68 weist ein zusätzliches Bedienterminal 88 auf. Das Bedienterminal 88 ist zu einer manuellen Bedienung des Mess- und/oder Einstellgeräts 22 vorgesehen. Das Bedienterminal 88 ist zumindest entlang einer Seitenwand 90 des Gehäuses 26, insbesondere entlang der Seitenwand 90 des Gehäuses 26, welche die Klappe 28 aufweist, frei verschiebbar. Dadurch kann vorteilhaft ein hoher Bedienkomfort erreicht werden.

Die Multispann- und Mess- und/oder Einstellstation 68 weist eine Erkennungseinheit 58 auf. Die Erkennungseinheit 58 ist dazu vorgesehen, eine Werkzeugaufnahme 12 zu erkennen. Die Erkennungseinheit 58 ist dazu vorgesehen, ein Werkzeug 10 zu erkennen. Im dargestellten Fall ist die Erkennungseinheit 58 als ein QR-Code- und/oder Barcode-Scanner ausgebildet. Die Steuer- und/oder Regeleinheit 60 ist dazu vorgesehen, auf Grundlage der durch die Erkennungseinheit 58 ermittelten Daten die zu der jeweiligen erkannten Werkzeugaufnahme 12 passende Werkzeugeinspanneinheit 14, 16, 18, 20 vorzubereiten. Die Steuer- und/oder Regeleinheit 60 ist dazu vorgesehen, auf Grundlage der durch die Erkennungseinheit 58 ermittelten Daten den Handhabungsroboter 24 dazu zu veranlassen, die erkannte Werkzeugaufnahme 12 der passenden vorbereiteten Werkzeugeinspanneinheit 14, 16, 18, 20 zu einer Montage/Demontage eines Werkzeugs 10 in/aus die/der Werkzeugaufnahme 12 zuzuführen.

Fig. 3 zeigt ein Schema eines Innenlebens der Multispann- und Mess- und/oder Einstellstation 68. Alle vier vollautomatisierten Werkzeugeinspanneinheiten 14, 16, 18, 20 sind als unterschiedliche Werkzeugeinspanneinheiten 14, 16, 18, 20 ausgebildet, welche zumindest dazu vorgesehen sind, Werkzeuge 10 vollautomatisiert in jeweils verschiedene Werkzeugaufnahmen 12 mit jeweils unterschiedlichen Spannmethoden zu montieren und/oder Werkzeuge 10 aus jeweils verschiedenen Werkzeugaufnahmen 12 mit jeweils unterschiedlichen Spannmethoden zu demontieren. Die erste Werkzeugeinspanneinheit 14 ist für Werkzeugaufnahmen 12 mit einer ersten Spannmethode vorgesehen. Die zweite Werkzeugeinspanneinheit 16 ist für Werkzeugaufnahmen 12 mit einer zweiten Spannmethode vorgesehen, welche unterschiedlich ist von der durch die erste Werkzeugeinspanneinheit 14 ausführbare Spannmethode. Die dritte Werkzeugeinspanneinheit 18 ist für Werkzeugaufnahmen 12 mit einer dritten Spannmethode vorgesehen, welche unterschiedlich ist von den durch die erste Werkzeugeinspanneinheit 14 und durch die zweite Werkzeugeinspanneinheit 16 ausführbaren Spannmethoden. Die vierte Werkzeugeinspanneinheit 20 ist für Werkzeugaufnahmen 12 mit einer vierten Spannmethode vorgesehen, welche unterschiedlich ist von den durch die erste Werkzeugeinspanneinheit 14, durch die zweite Werkzeugeinspanneinheit 16 und durch die dritte Werkzeugeinspanneinheit 18 ausführbaren Spannmethoden. Die vier Werkzeugeinspanneinheiten 14, 16, 18, 20 sind vollständig voneinander getrennt ausgebildet. Die vier Werkzeugeinspanneinheiten 14, 16, 18, 20 sind jeweils unabhängig von den anderen Werkzeugeinspanneinheiten 14, 16, 18, 20 vollständig funktionsfähig. Alle vier Werkzeugeinspanneinheiten 14, 16, 18, 20 werden von dem Handhabungsroboter 24 bestückt.

Die Multispann- und Mess- und/oder Einstellstation 68 weist eine Werkzeugmontagestation 56 auf. Die Werkzeugmontagestation 56 ist dazu vorgesehen, aus mehreren Teilen bestehende Werkzeuge 10 vollautomatisch zu montieren und/oder zu demontieren. Das Montieren und/oder das Demontieren der Werkzeuge 10 kann dabei entweder von dem Handhabungsroboter 24 oder von einer separaten Handhabungsvorrichtung der Werkzeugmontagestation 56 vorgenommen werden. Der Handhabungsroboter 24 ist dazu vorgesehen, die Werkzeugmontagestation 56 zu bestücken. Die Multispann- und Mess- und/oder Einstellstation 68 weist eine Reinigungsstation 48 auf. Die Multispann- und Mess- und/oder Einstellstation 68 weist eine weitere Reinigungsstation 92 auf. Die Reinigungsstation 48, 92 ist dazu vorgesehen, zumindest einen Teil des Werkzeugs 10, insbesondere zumindest eine Schneide des Werkzeugs 10 vor einem Montieren in der Werkzeugaufnahme 12 zu reinigen. Die Reinigungsstation 48, 92 ist dazu vorgesehen, zumindest einen Teil des Werkzeugs 10, insbesondere zumindest eine Schneide des Werkzeugs 10 vor einem Demontieren des Werkzeugs 10 aus der Werkzeugaufnahme 12 zu reinigen. Eine der Reinigungsstationen 48, 92 ist dazu vorgesehen, das Werkzeug 10 mittels eines Besprühens mit Wasserdampf aus einer Wasserdampf-Sprühdüse zu reinigen. Eine der Reinigungsstationen 48, 92 ist dazu vorgesehen, das Werkzeug 10 mittels eines Abtupfens zu reinigen. Das Abtupfen und/oder das Besprühen kann dabei entweder von dem Handhabungsroboter 24 oder von einer separaten Handhabungsvorrichtung der Reinigungsstation 48, 92 vorgenommen werden. Der Handhabungsroboter 24 ist dazu vorgesehen, die Reinigungsstationen 48, 92 zu bestücken. Das Mess- und/oder Einstellgerät 22 ist dazu vorgesehen, eine Reinheit eines in zumindest einer der Reinigungsstationen 48, 92 gereinigten Teils eines Werkzeugs 10 optisch zu überprüfen.

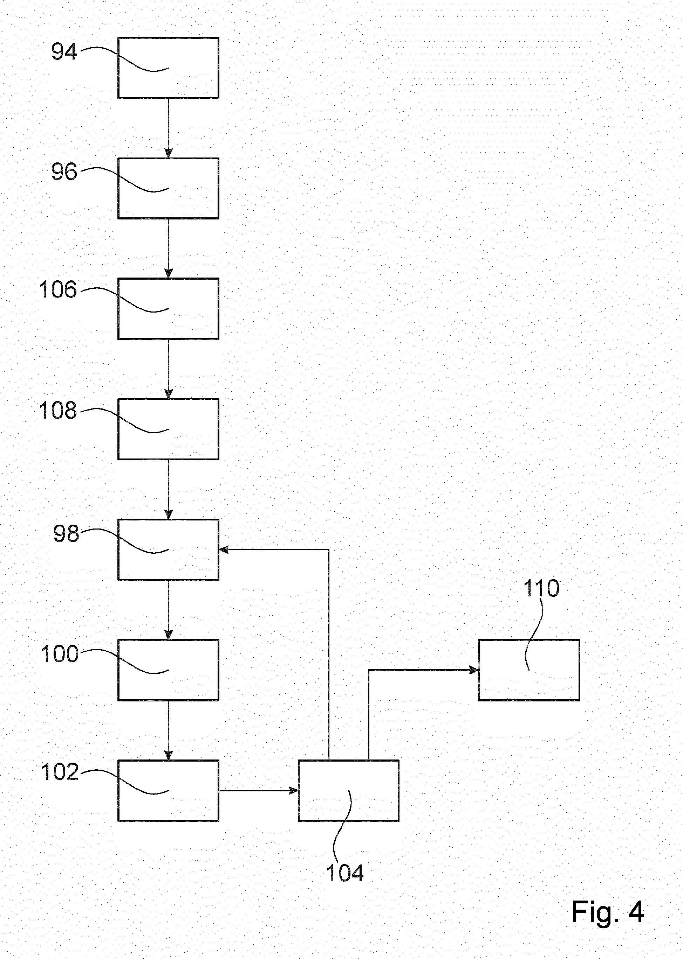

Fig. 4 zeigt ein Ablaufdiagramm eines Reinigungsverfahrens der Multispann- und Mess- und/oder Einstellstation 68. In zumindest einem Verfahrensschritt 94 wird ein verschmutztes Werkzeug 10 oder eine verschmutzte Werkzeugeinheit 74 durch die Schleuseneinheit 62 der Multispann- und Mess- und/oder Einstellstation 68 zugeführt. In zumindest einem weiteren Verfahrensschritt 96 wird das verschmutzte Werkzeug 10 oder die verschmutzte Werkzeugeinheit 74 durch den Handhabungsroboter 24 von der Schleuseneinheit 62 zu dem Mess- und/oder Einstellgerät 22 bewegt und darin eingesetzt. In zumindest einem weiteren Verfahrensschritt 106 wird das verschmutzte Werkzeug 10 oder die verschmutzte Werkzeugeinheit 74 optisch vermessen. In zumindest einem weiteren Verfahrensschritt 108 wird das verschmutzte Werkzeug 10 oder die verschmutzte Werkzeugeinheit 74 durch den Handhabungsroboter 24 zu einer der Reinigungsstationen 48, 92 bewegt und in die Reinigungsstation 48, 92 eingesetzt. In zumindest einem Reinigungsschritt 98 wird das verschmutzte Werkzeug 10 oder die verschmutzte Werkzeugeinheit 74 in einer ersten der beiden Reinigungsstationen 48, 92 gereinigt. In zumindest einem weiteren Reinigungsschritt 100 wird das verschmutzte Werkzeug 10 oder die verschmutzte Werkzeugeinheit 74 in einer zweiten der beiden Reinigungsstationen 48, 92 gereinigt. In zumindest einem weiteren Verfahrensschritt 102 wird das gereinigte Werkzeug 10 oder die gereinigte Werkzeugeinheit 74 durch den Handhabungsroboter 24 von der Reinigungsstation 48, 92 zu dem Mess- und/oder Einstellgerät 22 bewegt und in das Mess- und/oder Einstellgerät 22 eingesetzt. In zumindest einem weiteren Verfahrensschritt 104 wird das Werkzeug 10 oder die Werkzeugeinheit 74 erneut optisch vermessen und somit kontrolliert. Wenn das Werkzeug 10 oder die Werkzeugeinheit 74 weiterhin Verschmutzungen aufweist, wird das Werkzeug 10 oder die Werkzeugeinheit 74 erneut den Reinigungsstationen 48, 92 zugeführt und es werden erneut die Reinigungsschritte 98, 100 durchgeführt. Wenn das Werkzeug 10 oder die Werkzeugeinheit 74 jedoch frei ist von Verschmutzungen, wird der Reinigungsvorgang beendet. Nach einer Beendigung des Reinigungsvorgangs wird das Werkzeug 10 oder die Werkzeugeinheit 74 in zumindest einem weiteren Verfahrensschritt 110 durch den Handhabungsroboter 24 einer der Werkzeugeinspanneinheiten 14, 16, 18, 20 zugeführt.

Die Multispann- und Mess- und/oder Einstellstation 68 weist eine Wuchtstation 50 auf (vgl. Fig. 3). Die Wuchtstation 50 ist dazu vorgesehen, eine Unwucht einer Kombination aus Werkzeug 10 und Werkzeugaufnahme 12, d.h. einer Werkzeugeinheit 74, zu bestimmen. Die Wuchtstation 50 ist dazu vorgesehen, die Unwucht mittels einer Rotation der Werkzeugeinheit 74 zu ermitteln. Der Handhabungsroboter 24 ist dazu vorgesehen, die Wuchtstation 50 zu bestücken.

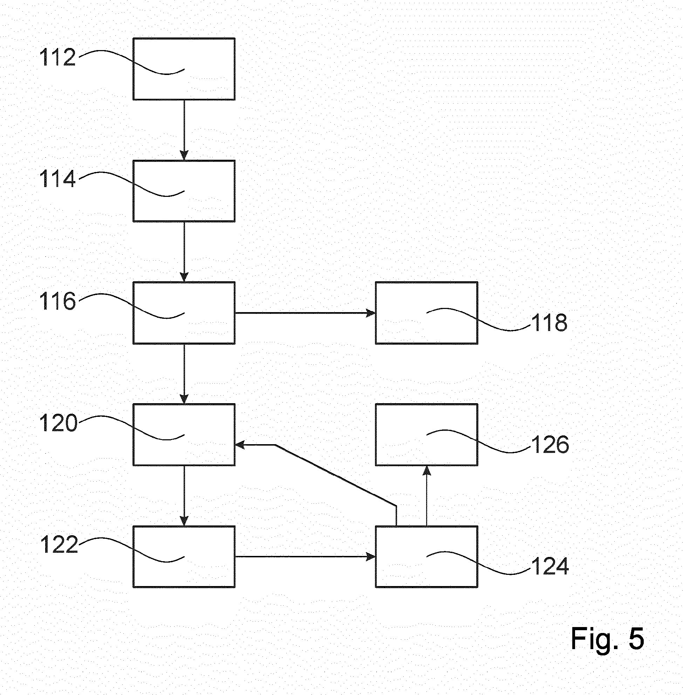

Fig. 5 zeigt ein Ablaufdiagramm eines Wuchtverfahrens der Multispann- und Mess- und/oder Einstellstation 68. In zumindest einem Verfahrensschritt 112 wird eine Werkzeugeinheit 74 in einer der Werkzeugeinspanneinheiten 14, 16, 18, 20 erzeugt. In zumindest einem weiteren Verfahrensschritt 114 wird die Werkzeugeinheit 74 von dem Handhabungsroboter 24 von der Werkzeugeinspanneinheit 14, 16, 18, 20 zu der Wuchtstation 50 bewegt und darin eingesetzt. In zumindest einem Wuchtschritt 116 wird eine Unwucht der Werkzeugeinheit 74 mittels einer Rotation der Werkzeugeinheit 74 ermittelt. Falls eine Unwucht unterhalb einer Toleranzunwucht liegt, wird der Wuchtvorgang beendet. Nach einer Beendigung des Wuchtvorgangs wird die Werkzeugeinheit 74 in zumindest einem weiteren Verfahrensschritt 118 durch den Handhabungsroboter 24 in die Schleuseneinheit 62 zu einer Entnahme aus der Multispann- und Mess- und/oder Einstellstation 68 abgelegt. Falls die Unwucht oberhalb einer Toleranzunwucht liegt, wird die Werkzeugeinheit 74 in zumindest einem weiteren Verfahrensschritt 120 durch den Handhabungsroboter 24 zurück an die Werkzeugeinspanneinheit 14, 16, 18, 20 übergeben. In zumindest einem weiteren Verfahrensschritt 122 wird die Werkzeugeinheit 74 zunächst auseinandergebaut und dann erneut zusammengebaut. In zumindest einem weiteren Verfahrensschritt 124 wird die erneut zusammengebaute Werkzeugeinheit 74 erneut der Wuchtstation 50 zugeführt und die Unwucht der Werkzeugeinheit 74 in dem Wuchtschritt 116 erneut bestimmt. Falls die Unwucht der Werkzeugeinheit 74 immer noch oberhalb der Toleranzunwucht liegt, wird die Werkzeugeinheit 74 in zumindest einem weiteren Verfahrensschritt 126 entweder aufgelöst und mit einer anderen Werkzeugeinheit 74 kombiniert, erneut auseinander- und zusammengebaut oder aussortiert.

Die Komponenten der Multispann- und Mess- und/oder Einstellstation 68 sind in einem Rechteck rund um den Handhabungsroboter 24 angeordnet (vgl. Fig. 3). Der Handhabungsroboter 24 ist in einer Mitte der Multispann- und Mess- und/oder Einstellstation 68, insbesondere des Gehäuses 26 angeordnet. Der Handhabungsroboter 24 ist derart angeordnet, dass er alle Komponenten der Multispann- und Mess- und/oder Einstellstation 68 erreichen kann. Die Komponenten der Multispann- und Mess- und/oder Einstellstation 68 bilden in diesem Zusammenhang die vier Werkzeugeinspanneinheiten 14, 16, 18, 20, das Mess- und/oder Einstellgerät 22, die Reinigungsstationen 48, 92, die Wuchtstation 50 und/oder die Schleusen 76, 80. Die Multispann- und Mess- und/oder Einstellstation 68 weist einen modularen Aufbau auf. Die Multispann- und Mess- und/oder Einstellstation 68 weist eine Mehrzahl an Modulen 36 auf. Jede der vorgenannten Komponenten ist einem Modul 36 zugeordnet. Die erste Werkzeugeinspanneinheit 14 bildet ein Modul 36 aus. Die zweite Werkzeugeinspanneinheit 16 bildet ein Modul 36 aus. Die dritte Werkzeugeinspanneinheit 18 bildet ein Modul 36 aus. Die vierte Werkzeugeinspanneinheit 20 bildet ein Modul 36 aus. Die Reinigungsstation 48 bildet ein Modul 36 aus. Die weitere Reinigungsstation 92 bildet ein Modul 36 aus. Die Wuchtstation 50 bildet ein Modul 36 aus. Jede Schleuse 76, 80 der Schleuseneinheit 62 bildet ein Modul 36 aus. Das Mess- und/oder Einstellgerät 22 bildet ein Modul 36 aus. Der Handhabungsroboter 24 bildet ein Modul 36 aus oder ist aus einer Mehrzahl, insbesondere aus vier, Modulen 36 zusammengesetzt. Eine Anordnung der Komponenten der Multispann- und Mess- und/oder Einstellstation 68 innerhalb des Gehäuses 26 ist modular wählbar und/oder modular änderbar. Eine Zusammenstellung der Komponenten der Multispann- und Mess- und/oder Einstellstation 68 innerhalb des Gehäuses 26 ist modular wählbar und/oder modular änderbar.

Alle Module 36 weisen eine einheitliche Modulbreite 128 auf. Die Modulbreite 128 beträgt ca. 700 mm. Alle Module 36 weisen eine einheitliche Modultiefe 130 auf. Die Modultiefe 130 beträgt ca. 1000 mm. Alle Module 36 weisen eine einheitliche Modulhöhe 134 auf (vgl. Fig. 6). Die Modulhöhe 134 beträgt etwa 1000 mm. Es ist denkbar, dass zumindest eines der Module 36 eine Modulbreite 128 aufweist, welche einem Vielfachen der Modulbreite 128 weiterer Module 36 entspricht. Es ist denkbar, dass zumindest eines der Module 36 eine Modultiefe 130 aufweist, welche einem Vielfachen der Modultiefe 130 weiterer Module 36 entspricht. Die Multispann- und Mess- und/oder Einstellstation 68 umfasst eine Mehrzahl an Modulplätzen 78. Jedes Modul 36 nimmt genau einen Modulplatz 78 ein. Die Multispann- und Mess- und/oder Einstellstation 68 umfasst im dargestellten Fall 16 Module 36. Der Handhabungsroboter 24 nimmt dabei vier Modulplätze 78 ein. Die Module 36 weisen Verbindungselemente 132 auf. Die Verbindungselemente 132 sind zu einer Schnellmontage der Module 36 miteinander vorgesehen. Die Verbindungselemente 132 sind jeweils an identischen Positionen an jedem Modul 36 angeordnet. Jedes Modul 36 weist eine Aufstellfläche 136 zur Aufnahme der funktionellen Einheiten der Komponenten der Multispann- und Mess- und/oder Einstellstation 68 auf. Die Aufstellflächen 136 verschiedener Module 36, insbesondere mit Ausnahme der dem Handhabungsroboter 24 zugeordneten Module 36, sind auf identischen Höhen, insbesondere auf der Modulhöhe 134, angeordnet. Die Multispann- und Mess- und/oder Einstellstation 68 umfasst einen Schaltschrank 138. Der Schaltschrank 138 beinhaltet zumindest die Steuer- und/oder Regeleinheit 60. Der Schaltschrank 138 ist als ein Modul 36 ausgebildet. Der Schaltschrank 138 umfasst eine Tür 140. Die Tür 140 des Schaltschranks 138 ist in das Gehäuse 26 integriert. Die Tür 140 des Schaltschranks 138 ist von außerhalb der Multispann- und Mess- und/oder Einstellstation 68 zugänglich.

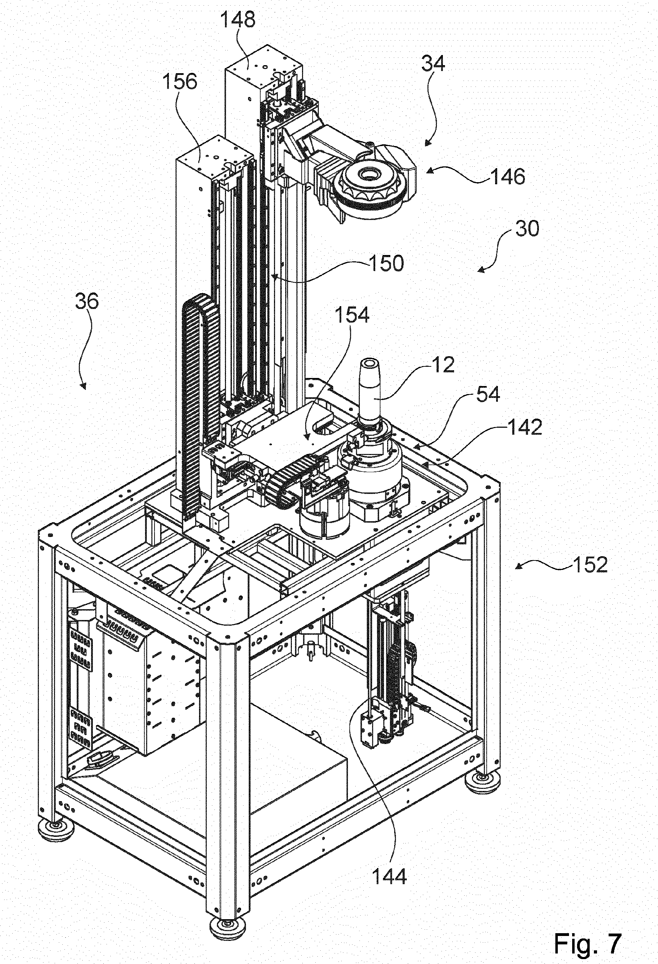

Fig. 7 zeigt eine als Schrumpfspannstation 30 ausgebildete Werkzeugeinspanneinheit 14, 16, 18, 20. Die Schrumpfspannstation 30 umfasst ein Modulgestell 152, an oder auf welchem die funktionalen Einheiten der Schrumpfspannstation 30 montiert sind. Die Schrumpfspannstation 30 umfasst eine Haltevorrichtung 142 für Werkzeugaufnahmen 12. Die Haltevorrichtung 142 umfasst einen Längeneinstellpin 144 zu einer Voreinstellung einer Einstecktiefe für ein Werkzeug 10 in der Werkzeugaufnahme 12. Der Längeneinstellpin 144 ist dazu vorgesehen, von unten in die Werkzeugaufnahme 12 eingeschoben zu werden und so einen Anschlag für ein Werkzeug 10 auszubilden, welches in einem Schrumpfspannvorgang in die Werkzeugaufnahme 12 eingeführt wird. In der in Fig. 7 gezeigten Haltevorrichtung 142 ist ein Schrumpfspannfutter positioniert. Die Schrumpfspannstation 30 umfasst eine Heizstation 34. Die Heizstation 34 umfasst eine Induktionsspuleneinheit 146. Die Induktionsspuleneinheit 146 ist dazu vorgesehen, das Schrumpfspannfutter thermisch aufzuweiten. Die Induktionsspuleneinheit 146 ist dazu vorgesehen, über das Schrumpfspannfutter gestülpt zu werden. Die Schrumpfspannstation 30 umfasst einen Turm 148. Der Turm 148 umfasst Lagerschienen 150. Die Induktionsspuleneinheit 146 ist linear entlang der Lagerschienen 150 auf- und ab bewegbar. Die Induktionsspuleneinheit 146 ist entlang der Lagerschienen 150 auf die Haltevorrichtung 142 zu bewegbar. Die Schrumpfspannstation 30 umfasst eine Greifervorrichtung 154. Die Greifervorrichtung 154 ist dazu vorgesehen, ein Werkzeug 10 oder eine Werkzeugaufnahme 12 zu greifen und horizontal und vertikal relativ zu der Haltevorrichtung 142 zu bewegen. Die Greifervorrichtung 154 ist dazu vorgesehen, eine Werkzeugaufnahme 12 vollautomatisiert in die Haltevorrichtung 142 einzusetzen und/oder selbiges daraus zu entnehmen. Die Greifervorrichtung 154 ist dazu vorgesehen, ein Werkzeug 10 vollautomatisiert in eine Werkzeugaufnahme 12, insbesondere ein Schrumpfspannfutter, einzusetzen und/oder selbiges daraus zu entnehmen. Die Schrumpfspannstation 30 weist einen weiteren Turm 156 auf, an welchem die Greifervorrichtung 154 linear vertikal beweglich gelagert ist. Zudem ist die Greifervorrichtung 154 linear horizontal an dem weiteren Turm 156 gelagert.

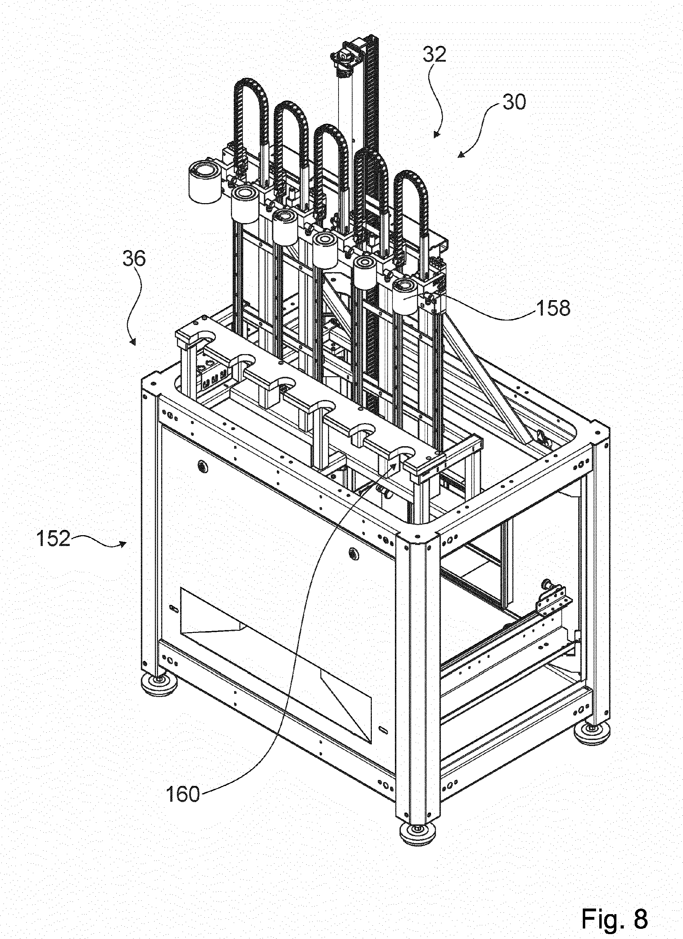

Die Schrumpfspannstation 30 umfasst neben der Heizstation 34 eine Kühlstation 32, welche in Fig. 8 gezeigt ist. Die Kühlstation 32 und die Heizstation 34 sind als voneinander getrennte Module 36 ausgebildet. Die Kühlstation 32 umfasst ein Modulgestell 152, an oder auf welchem die funktionalen Einheiten der Kühlstation 32 montiert sind. Die Kühlstation 32 ist dazu vorgesehen, eine Mehrzahl an Werkzeugaufnahmen 12 gleichzeitig zu kühlen. Die Kühlstation 32 umfasst eine Mehrzahl an Kühlmanschetten 158 (auch Kühlglocken genannt). Die Kühlmanschetten 158 sind dazu vorgesehen, zu einer Kühlung über ein aufgeheiztes Schrumpfspannfutter gestülpt zu werden. Die Kühlmanschetten 158 sind vollautomatisiert bewegbar. Die Kühlmanschetten 158 sind zu einem Wärmeabtransport von einem Kühlmedium, beispielsweise Wasser, durchströmt. Die Kühlmanschetten 158 sind jeweils linear vertikal beweglich gelagert. Die Kühlmanschetten 158 sind unabhängig voneinander linear vertikal bewegbar. Die Kühlstation 32 umfasst im dargestellten Fall sechs Kühlplätze 160. Jeder Kühlplatz 160 ist zu einer Kühlung eines Schrumpfspannfutters vorgesehen. Somit können in der Kühlstation 32 bis zu sechs Schrumpfspannfutter gleichzeitig gekühlt werden.

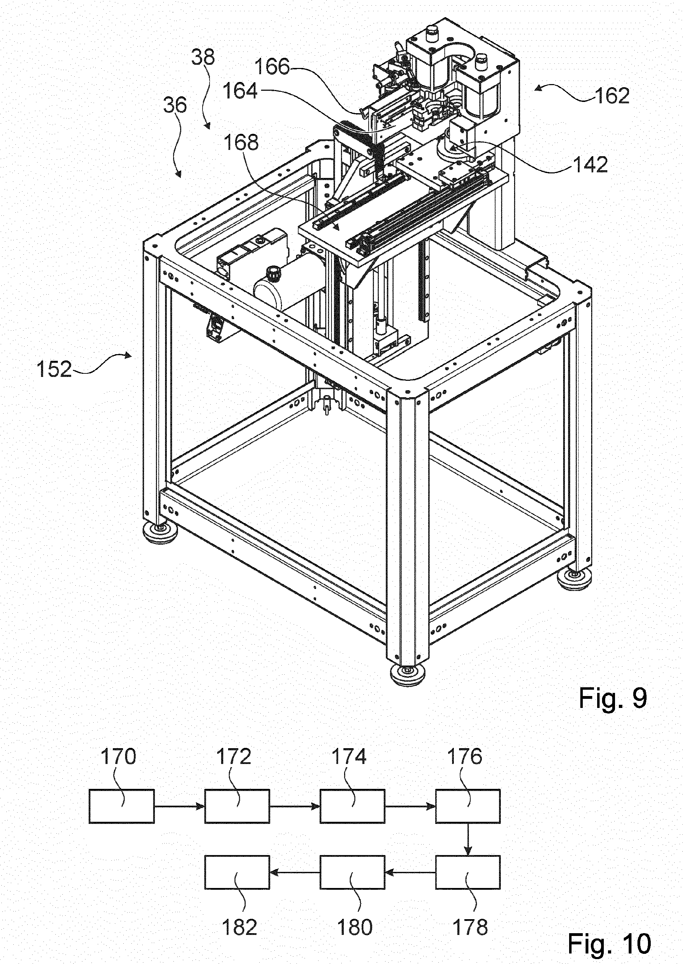

Fig. 9 zeigt eine als Pressspannstation 38 ausgebildete Werkzeugeinspanneinheit 14, 16, 18, 20. Die Pressspannstation 38 ist dazu vorgesehen, Werkzeuge 10 mittels eines Verpressens von Werkzeugaufnahmen 12, insbesondere von Spannzangenfuttern, in die Werkzeugaufnahmen 12 zu montieren oder aus den Werkzeugaufnahmen 12 zu demontieren. Die Pressspannstation 38 umfasst ein Modulgestell 152, an oder auf welchem die funktionalen Einheiten der Pressspannstation 38 montiert sind. Die Pressspannstation 38 weist eine hydraulisch oder pneumatisch betriebene Presseinheit 162 auf. Die Presseinheit 162 weist ein Verschlusselement 164 auf. Das Verschlusselement 164 muss während einem Pressspannvorgang geschlossen sein und muss zu einer Entnahme oder zu einem Einsetzen eines Spannzangenfutters geöffnet sein. Das Verschlusselement 164 der Presseinheit 162 umfasst einen Bedien- und Verriegelungshebel 166. Der Bedien- und Verriegelungshebel 166 ist derart ausgebildet, dass er von dem Handhabungsroboter 24 ergreifbar und bedienbar ist. Der Handhabungsroboter 24 ist dazu vorgesehen, das Verschlusselement 164 der Presseinheit 162 zu betätigen. Die Pressspannstation 38 umfasst eine Haltevorrichtung 142. Die Haltevorrichtung 142 der Pressspannstation 38 ist dazu vorgesehen, einen Spannzangenhalter eines Spannzangenfutters zu haltern. Die Pressspannstation 38 umfasst eine horizontale Lagerschiene 168. Die Lagerschiene 168 der Pressspannstation 38 ist dazu vorgesehen, die Haltevorrichtung 142 der Pressspannstation 38 derart beweglich zu lagern, dass diese aus der Presseinheit 162 herausfahrbar oder in die Presseinheit 162 hineinfahrbar ist. Der Handhabungsroboter 24 ist dazu vorgesehen, die Haltevorrichtung 142 der Pressspannstation 38 entlang der Lagerschiene 168 der Pressspannstation 38 zu bewegen.

Fig. 10 zeigt ein Ablaufdiagramm eines vollautomatisierten Pressspannverfahrens der Pressspannstation 38. In zumindest einem Verfahrensschritt 170 wird ein aus Spannzange und Spannzangenhalter bestehendes Spannzangenfutter mit einem Werkzeug 10 von dem Handhabungsroboter 24 in die aus der Presseinheit 162 herausgefahrene Haltevorrichtung 142 der Pressspannstation 38 eingesetzt. In zumindest einem weiteren Verfahrensschritt 172 wird die Haltevorrichtung 142 der Pressspannstation 38 von dem Handhabungsroboter 24 entlang der Lagerschiene 168 der Pressspannstation 38 in die Presseinheit 162 hineingeschoben. In zumindest einem weiteren Verfahrensschritt 174 wird das Verschlusselement 164 der Presseinheit 162 von dem Handhabungsroboter 24 geschlossen und verriegelt. In zumindest einem Pressspannschritt 176 wird das Werkzeug 10 in dem Spannzangenfutter mittels eines Verpressens der Spannzange und des Spannzangenhalters eingespannt. In zumindest einem weiteren Verfahrensschritt 178 wird das Verschlusselement 164 der Presseinheit 162 von dem Handhabungsroboter 24 entriegelt und geöffnet. In zumindest einem weiteren Verfahrensschritt 180 wird die Haltevorrichtung 142 der Pressspannstation 38 von dem Handhabungsroboter 24 entlang der Lagerschiene 168 der Pressspannstation 38 aus der Presseinheit 162 herausgezogen. In zumindest einem weiteren Verfahrensschritt 182 wird die fertig gespannte Werkzeugeinheit 74 aus der Pressspannstation 38 entnommen. In einem Verfahren, in dem das Werkzeug 10 aus dem Spannzangenfutter entfernt werden soll, werden die oben aufgeführten Verfahrensschritte im Wesentlichen in umgekehrter Reihenfolge ausgeführt.

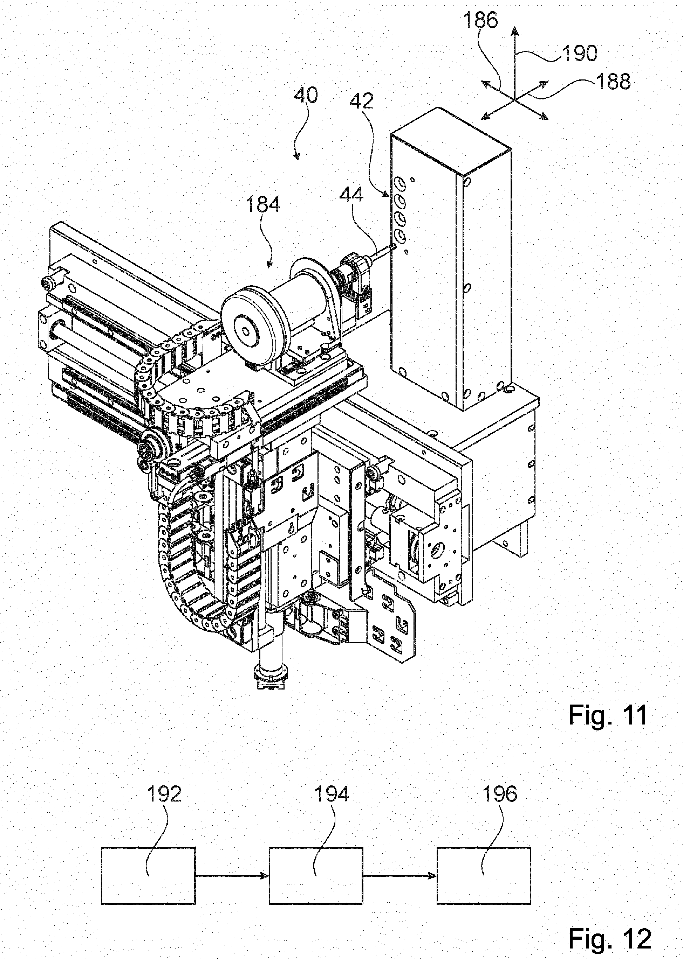

Eine Werkzeugeinspanneinheit 14, 16, 18, 20 der Multispann- und Mess- und/oder Einstellstation 68 ist als eine Hydrodehn-Schraubstation 40 ausgebildet ist. Die Hydrodehn-Schraubstation 40 umfasst ein Modulgestell 152, an oder auf welchem die funktionalen Einheiten der Hydrodehn-Schraubstation 40 montiert sind. Es ist denkbar, dass die Hydrodehn-Schraubstation 40 an dem Mess- und/oder Einstellgerät 22 montiert ist. In diesem Fall ist die Hydrodehn-Schraubstation 40 und das Mess- und/oder Einstellgerät 22 auf einem identischen Modulgestell 152 montiert. Die Hydrodehn-Schraubstation 40 umfasst eine Schraubeinheit 184 (siehe Fig. 11). Die Schraubeinheit 184 ist dazu vorgesehen, eine Spannschraube einer Werkzeugaufnahme 12, insbesondere eines Hydrodehn-Spannfutters, zu einem Spannen oder zu einem Entspannen des Hydrodehn-Spannfutters zu betätigen. Die Schraubeinheit 184 ist in zumindest eine, vorzugsweise in zumindest zwei zueinander senkrecht stehende, horizontale Raumrichtungen 186, 188 bewegbar. Die Schraubeinheit 184 ist zumindest in eine vertikale Raumrichtung 190 bewegbar. Die Schraubeinheit 184 umfasst zumindest einen wechselbaren Schraubkopf 44. Der Schraubkopf 44 ist an einer Rotationsachse der Schraubeinheit 184 befestigt. Der Schraubkopf 44 ist dazu vorgesehen, in einen Schraubenkopf der Spannschraube formschlüssig einzugreifen und dadurch eine Rotation der Spannschraube zu erzeugen. Unterschiedliche Spannschrauben können jedoch unterschiedliche Schraubenköpfe aufweisen. Deshalb weist die Hydrodehn-Schraubstation 40 ein Schraubkopfmagazin 42 auf. Das Schraubkopfmagazin 42 umfasst eine Mehrzahl unterschiedlich geformter und/oder unterschiedlich großer Schraubköpfe 44. Die Hydrodehn-Schraubstation 40 ist dazu vorgesehen, einen vollautomatisierten Wechsel des aktiven Schraubkopfes 44 vorzunehmen.

Fig. 12 zeigt ein Ablaufdiagramm eines vollautomatisierten Ein- und Ausspannverfahrens für ein Werkzeug 10 mit einem Hydrodehn-Spannfutter mittels der Hydrodehn-Schraubstation 40. In zumindest einem Verfahrensschritt 192 wird bei einem Einspannvorgang eine Spannschraube eines Hydrodehn-Spannfutters, welches frei ist von einem Werkzeug 10, vollständig, d.h. bis zu einem Anschlag von der Schraubeinheit 184, eingeschraubt. Dadurch wird vorteilhaft ein Ausgangspunkt festgelegt, welcher verhindern soll, dass bei einem anschließenden Ausspannvorgang mit demselben Hydrodehn-Spannfutter die Spannschraube komplett aus dem Hydrodehn-Spannfutter herausgeschraubt wird.

Dadurch kann vorteilhaft eine hohe Betriebssicherheit mit besonders geringen Ausfallzeiten erreicht werden. In zumindest einem weiteren Verfahrensschritt 194 wird der durch das vollständige Einschrauben festgelegte Ausgangspunkt als ein Parameter in einer Speichereinheit der Multispann- und Mess- und/oder Einstellstation 68 abgespeichert. In zumindest einem weiteren Verfahrensschritt 196 wird bei einer erneuten Registrierung desselben Hydrodehn-Spannfutters durch die Erkennungseinheit 58 der in der Speichereinheit abgelegte Parameter aufgerufen und an die Hydrodehn-Schraubstation 40 zur Verwendung in dem Ausspannvorgang übermittelt.

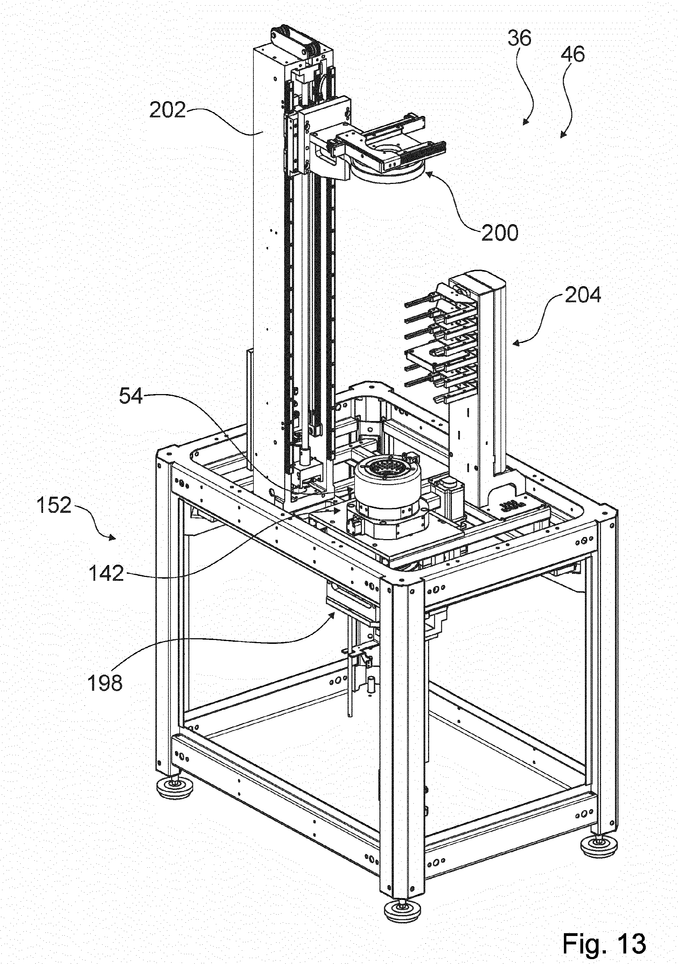

Fig. 13 zeigt eine als Überwurfmutter-Schraubstation 46 ausgebildete Werkzeugeinspanneinheit 14, 16, 18, 20. Die Überwurfmutter-Schraubstation 46 ist dazu vorgesehen, Werkzeuge 10 mittels eines Anziehens einer Überwurfmutter 72 in einer Werkzeugaufnahme 12 zu montieren. Die Überwurfmutter-Schraubstation 46 ist dazu vorgesehen, Werkzeuge 10 mittels eines Lösens einer Überwurfmutter 72 aus einer Werkzeugaufnahme 12 zu demontieren. Die Überwurfmutter-Schraubstation 46 ist dazu vorgesehen, eine werkzeugflächenlose Überwurfmutter 72 (vgl. Fig. 1) vollautomatisiert festzuziehen und/oder zu lösen. Die Überwurfmutter-Schraubstation 46 umfasst ein Modulgestell 152, an oder auf welchem die funktionalen Einheiten der Überwurfmutter-Schraubstation 46 montiert sind. Die Überwurfmutter-Schraubstation 46 umfasst eine Haltevorrichtung 142 für Werkzeugaufnahmen 12. Die Überwurfmutter-Schraubstation 46 umfasst eine Antriebseinheit 198, welche dazu vorgesehen ist, die Haltevorrichtung 142 der Überwurfmutter-Schraubstation 46 und die darin fixierte Werkzeugaufnahme 12 in eine Rotationsbewegung zu versetzen. Die Überwurfmutter-Schraubstation 46 weist ein Drehmomentelement 200 auf. Das Drehmomentelement 200 ist dazu vorgesehen, rotationsfest mit der Überwurfmutter 72 verklemmt zu werden. Das Drehmomentelement 200 ist dazu vorgesehen, die Überwurfmutter 72 festzuhalten, so dass sie einer Rotation der zu der Überwurfmutter 72 zugehörigen Werkzeugaufnahme 12 nicht folgen kann. Die Überwurfmutter-Schraubstation 46 weist einen Turm 202 auf. Das Drehmomentelement 200 ist entlang des Turms 202 vertikal auf und ab bewegbar. Das Drehmomentelement 200 ist mittels der Vertikalbewegung entlang des Turms 202 relativ zu einer Werkzeugaufnahme 12 in der Haltevorrichtung 142 der Überwurfmutter-Schraubstation 46 bewegbar, vorzugsweise zumindest teilweise über die Werkzeugaufnahme 12 stülpbar. Der Handhabungsroboter 24 ist dazu vorgesehen, einen Klemmmechanismus des Drehmomentelements 200, welcher dazu vorgesehen ist, das Drehmomentelement 200 mit der Überwurfmutter 72 der Werkzeugaufnahme 12 zu verklemmen, zu aktivieren. Die Überwurfmutter-Schraubstation 46 weist ein Drehmomentelement-Magazin 204 auf. Das Drehmomentelement-Magazin 204 umfasst eine Mehrzahl unterschiedlicher Drehmomentelemente 200, welche jeweils für eine Fixierung von unterschiedlich geformten und/oder unterschiedlich großen Überwurfmuttern 72 vorgesehen sind. Die Überwurfmutter-Schraubstation 46 ist dazu vorgesehen, einen vollautomatischen Wechsel des aktiven Drehmomentelements 200 vorzunehmen.

Fig. 14 zeigt das Mess- und/oder Einstellgerät 22. Das Mess- und/oder Einstellgerät 22 umfasst ein Modulgestell 152, an oder auf welchem die funktionalen Einheiten des Mess- und/oder Einstellgeräts 22 montiert sind. Das Mess- und/oder Einstellgerät 22 weist eine optische Messeinheit 206 auf. Die optische Messeinheit 206 umfasst eine Durchlichtmessanordnung und/oder eine Auflichtmessanordnung. Die optische Messeinheit 206 ist zu einem berührungslosen Vermessen von Werkzeugen 10 und/oder Werkzeugeinheiten 74 vorgesehen. Zudem ist denkbar, dass das Mess- und/oder Einstellgerät 22 zusätzlich taktile, elektrische oder weitere optische Sensoren, beispielsweise Sensoren zur Abstandsmessung, insbesondere im Nahbereich der optischen Messeinheit 206, beispielsweise in einem Mittelbereich 224 der optischen Messeinheit 206, aufweist. Dadurch kann vorteilhaft eine Anzahl bestimmbarer Parameter zu vermessender Werkzeuge 10 und/oder zu vermessender Werkzeugeinheiten 74 gesteigert werden. Das Mess- und/oder Einstellgerät 22 umfasst eine Haltevorrichtung 142. In der Haltevorrichtung 142 des Mess- und/oder Einstellgeräts 22 ist ein Vorsatzhalter 54 angeordnet. Vorzugsweise sind identische Vorsatzhalter 54 kompatibel mit mehreren, vorzugsweise allen, Haltevorrichtungen 142 mehrerer, vorzugsweise aller, Komponenten der Multispann- und Mess- und/oder Einstellstation 68. Der Vorsatzhalter 54 bildet einen werkzeughalterspezifischen Adapter aus, welcher zwischen der Haltevorrichtung 142 und der Werkzeugaufnahme 12 zwischengeschaltet ist. Das Mess- und/oder Einstellgerät 22 weist ein Vorsatzhaltermagazin 52 zu einer Bereitstellung einer Mehrzahl unterschiedlicher Vorsatzhalter 54 für unterschiedliche Werkzeugaufnahmen 12 auf. Der Handhabungsroboter 24 ist dazu vorgesehen, die Vorsatzhalter 54 mit Werkzeugaufnahmen 12 oder mit Werkzeugeinheiten 74 zu bestücken.

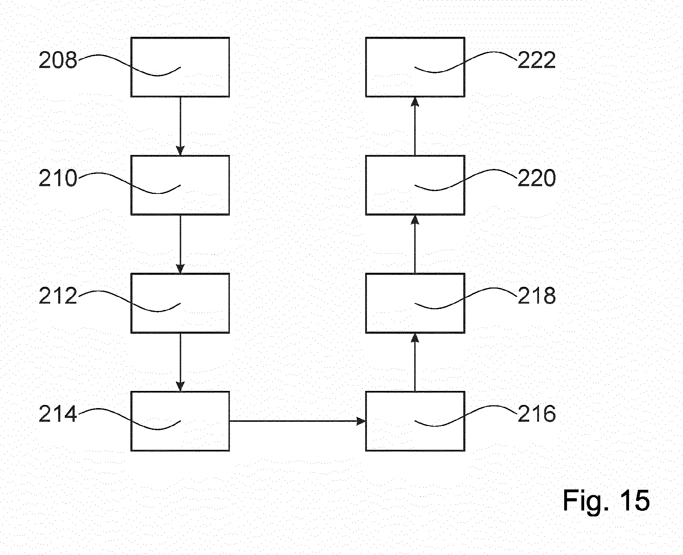

Fig. 15 zeigt ein Ablaufdiagramm eines Verfahrens zu einer Montage oder Demontage eines Werkzeugs 10 in oder aus einer Werkzeugaufnahme 12. In zumindest einem Verfahrensschritt 208 wird eine Werkzeugaufnahme 12 an der Schleuseneinheit 62 angeliefert. In zumindest einem weiteren Verfahrensschritt 210 wird die Werkzeugaufnahme 12 durch die Erkennungseinheit 58 erkannt. In zumindest einem weiteren Verfahrensschritt 212 wird anschließend eine zu der Werkzeugaufnahme 12 passende Werkzeugeinspanneinheit 14, 16, 18, 20 aus einer Mehrzahl an Werkzeugeinspanneinheiten 14, 16, 18, 20 bestimmt und entsprechend vorbereitet (d.h. die passenden Adapter, wie Vorsatzhalter 54 usw. oder Schraubköpfe 44 usw. werden montiert oder bestätigt). In zumindest einem weiteren Verfahrensschritt 214 wird die Werkzeugaufnahme 12 vollautomatisiert der passenden Werkzeugeinspanneinheit 14, 16, 18, 20 der Mehrzahl an Werkzeugeinspanneinheiten 14, 16, 18, 20 zugeführt. In zumindest einem weiteren Verfahrensschritt 216 wird ein Werkzeug 10 durch die im Vorfeld bestimmte und vorbereitete Werkzeugeinspanneinheit 14, 16, 18, 20 in die erkannte Werkzeugaufnahme 12 eingespannt oder aus der erkannten Werkzeugaufnahme 12 ausgespannt. In zumindest einem weiteren Verfahrensschritt 218 wird die fertig montierte Werkzeugeinheit 74 oder die fertig demontierte Werkzeugaufnahme 12 in der Schleuseneinheit 62 abgelegt. In zumindest einem weiteren Verfahrensschritt 220 wird eine Fertigstellung eines Auftrags, d.h. ein erfolgreiches Ein- und/oder Ausspannen von Werkzeugen 10 in und/oder aus Werkzeugaufnahmen 12 durch die Signalvorrichtung 64 signalisiert. In zumindest einem weiteren Verfahrensschritt 222 wird die fertig montierte Werkzeugeinheit 74 oder die fertig demontierte Werkzeugaufnahme 12 von einem Bediener aus der Schleuseneinheit 62 entnommen.

### Bezugszeichen

- 10: Werkzeug
- 12: Werkzeugaufnahme
- 14: Erste Werkzeugeinspanneinheit
- 16: Zweite Werkzeugeinspanneinheit
- 18: Dritte Werkzeugeinspanneinheit
- 20: Vierte Werkzeugeinspanneinheit
- 22: Mess- und/oder Einstellgerät
- 24: Handhabungsroboter
- 26: Gehäuse
- 28: Klappe
- 30: Schrumpfspannstation
- 32: Kühlstation
- 34: Heizstation
- 36: Modul
- 38: Pressspannstation
- 40: Hydrodehn-Schraubstation
- 42: Schraubkopfmagazin
- 44: Schraubkopf
- 46: Überwurfmutter-Schraubstation
- 48: Reinigungsstation
- 50: Wuchtstation
- 52: Vorsatzhaltermagazin
- 54: Vorsatzhalter
- 56: Werkzeugmontagestation
- 58: Erkennungseinheit
- 60: Steuer- und/oder Regeleinheit
- 62: Schleuseneinheit
- 64: Signalvorrichtung
- 66: Leuchteneinheit
- 68: Multispann- und Mess- und/oder Einstellstation
- 70: Werkzeugschaft
- 72: Überwurfmutter
- 74: Werkzeugeinheit
- 76: Schleuse
- 78: Modulplatz
- 80: Schleuse
- 82: Verschlusselement
- 84: Statusleuchte
- 86: Bedienpanel
- 88: Bedienterminal
- 90: Seitenwand
- 92: Weitere Reinigungsstation
- 94: Verfahrensschritt
- 96: Verfahrensschritt
- 98: Reinigungsschritt
- 100: Reinigungsschritt
- 102: Verfahrensschritt
- 104: Verfahrensschritt
- 106: Verfahrensschritt
- 108: Verfahrensschritt
- 110: Verfahrensschritt
- 112: Verfahrensschritt
- 114: Verfahrensschritt
- 116: Wuchtschritt
- 118: Verfahrensschritt
- 120: Verfahrensschritt
- 122: Verfahrensschritt
- 124: Verfahrensschritt
- 126: Verfahrensschritt
- 128: Modulbreite
- 130: Modultiefe
- 132: Verbindungselement
- 134: Modulhöhe
- 136: Aufstellfläche
- 138: Schaltschrank
- 140: Tür
- 142: Haltevorrichtung
- 144: Längeneinstellpin
- 146: Induktionsspuleneinheit
- 148: Turm
- 150: Lagerschienen
- 152: Modulgestell
- 154: Greifervorrichtung
- 156: Weiterer Turm
- 158: Kühlmanschette
- 160: Kühlplatz
- 162: Presseinheit
- 164: Verschlusselement
- 166: Bedien- und Verriegelungshebel
- 168: Lagerschiene
- 170: Verfahrensschritt
- 172: Verfahrensschritt
- 174: Verfahrensschritt
- 176: Pressspannschritt
- 178: Verfahrensschritt
- 180: Verfahrensschritt
- 182: Verfahrensschritt
- 184: Schraubeinheit
- 186: Horizontale Raumrichtung
- 188: Horizontale Raumrichtung
- 190: Vertikale Raumrichtung
- 192: Verfahrensschritt
- 194: Verfahrensschritt
- 196: Verfahrensschritt
- 198: Antriebseinheit
- 200: Drehmomentelement
- 202: Turm
- 204: Drehmomentelement-Magazin
- 206: Optische Messeinheit
- 208: Verfahrensschritt
- 210: Verfahrensschritt
- 212: Verfahrensschritt
- 214: Verfahrensschritt
- 216: Verfahrensschritt
- 218: Verfahrensschritt
- 220: Verfahrensschritt
- 222: Verfahrensschritt
- 224: Mittelbereich

## Patentansprüche

1. Multispann- und Mess- und/oder Einstellstation (68) für Werkzeuge (10), welche dazu vorgesehen ist, Werkzeuge (10) automatisiert, vorzugsweise vollautomatisiert, in Werkzeugaufnahmen (12) zu montieren und/oder aus Werkzeugaufnahmen (12) zu demontieren und die Werkzeuge (10) in den Werkzeugaufnahmen (12), insbesondere zumindest auf Länge, einzustellen und/oder zu vermessen, mit zumindest zwei, insbesondere vollautomatisierten, Werkzeugeinspanneinheiten (14, 16), mit zumindest einem, insbesondere optischen, Mess- und/oder Einstellgerät (22) für Werkzeuge (10) und mit zumindest einem Handhabungsroboter (24), welcher zumindest dazu vorgesehen ist, Werkzeuge (10) und Werkzeugaufnahmen (12) zwischen den Werkzeugeinspanneinheiten (14, 16) und dem Mess- und/oder Einstellgerät (22) zu bewegen **dadurch gekennzeichnet, dass** die zumindest zwei, insbesondere vollautomatisierten, Werkzeugeinspanneinheiten (14, 16) als unterschiedliche Werkzeugeinspanneinheiten (14, 16) ausgebildet sind, welche zumindest dazu vorgesehen sind, Werkzeuge (10) automatisiert, vorzugsweise vollautomatisiert, in jeweils verschiedene Werkzeugaufnahmen (12) mit jeweils unterschiedlichen Spannmethoden zu montieren und/oder aus jeweils verschiedenen Werkzeugaufnahmen (12) mit jeweils unterschiedlichen Spannmethoden zu demontieren.

2. Multispann- und Mess- und/oder Einstellstation (68) nach Anspruch 1,
**dadurch gekennzeichnet, dass** die Werkzeugeinspanneinheiten (14, 16, 18, 20) voneinander, insbesondere vollständig, getrennt ausgebildet sind.

3. Multispann- und Mess- und/oder Einstellstation (68) nach Anspruch 1 oder 2, **gekennzeichnet durch** zumindest eine dritte Werkzeugeinspanneinheit (18) für Werkzeugaufnahmen (12) mit einer dritten Spannmethode, welche unterschiedlich ist von den durch die beiden anderen Werkzeugeinspanneinheiten (14, 16) ausführbaren Spannmethoden.

4. Multispann- und Mess- und/oder Einstellstation (68) nach Anspruch 3, **gekennzeichnet durch** zumindest eine vierte Werkzeugeinspanneinheit (20) für Werkzeugaufnahmen (12) mit einer vierten Spannmethode, welche unterschiedlich ist von den durch die drei anderen Werkzeugeinspanneinheiten (14, 16, 18) ausführbaren Spannmethoden.

5. Multispann- und Mess- und/oder Einstellstation (68) nach einem der vorhergehenden Ansprüche, **dadurch gekennzeichnet, dass** die Werkzeugeinspanneinheiten (14, 16, 18, 20) und das Mess- und/oder Einstellgerät (22) zumindest abschnittsweise rund um den Handhabungsroboter (24) angeordnet sind.

6. Multispann- und Mess- und/oder Einstellstation (68) nach einem der vorhergehenden Ansprüche, **gekennzeichnet durch** ein gemeinsames Gehäuse (26), welches zumindest den Handhabungsroboter (24), die Werkzeugeinspanneinheiten (14, 16, 18, 20) und das Mess- und/oder Einstellgerät (22) zumindest zu einem Großteil umschließt.

7. Multispann- und Mess- und/oder Einstellstation (68) nach Anspruch 6, **dadurch gekennzeichnet, dass** das Gehäuse (26) eine öffenbare Klappe (28) aufweist, welche einen Zugang zu dem Mess- und/oder Einstellgerät (22) und eine manuelle Bedienung des Mess- und/oder Einstellgeräts (22) erlaubt.

8. Multispann- und Mess- und/oder Einstellstation (68) nach einem der vorhergehenden Ansprüche, **gekennzeichnet durch** einen modularen Aufbau.

9. Multispann- und Mess- und/oder Einstellstation (68) zumindest nach den Ansprüchen 6 und 8, **dadurch gekennzeichnet, dass** zumindest eine Anordnung zumindest eines Teils der Komponenten (14, 16, 18, 20, 22, 24, 32, 34, 48, 50, 56, 76, 80, 92) der Multispann- und Mess- und/oder Einstellstation (68) innerhalb des Gehäuses (26) modular wählbar und/oder modular änderbar ist.

10. Multispann- und Mess- und/oder Einstellstation (68) zumindest nach den Ansprüchen 6 und 8, **dadurch gekennzeichnet, dass** zumindest eine Zusammenstellung zumindest eines Teils der Komponenten (14, 16, 18, 20, 22, 24, 32, 34, 48, 50, 56, 76, 80, 92) der Multispann- und Mess- und/oder Einstellstation (68) innerhalb des Gehäuses (26) modular wählbar und/oder modular änderbar ist.

11. Multispann- und Mess- und/oder Einstellstation (68) nach einem der vorhergehenden Ansprüche, **dadurch gekennzeichnet, dass** zumindest eine Werkzeugeinspanneinheit (14, 16, 18, 20) als eine Schrumpfspannstation (30) ausgebildet ist.

12. Multispann- und Mess- und/oder Einstellstation (68) nach Anspruch 11, **dadurch gekennzeichnet, dass** die Schrumpfspannstation (30) eine Kühlstation (32) umfasst, welche dazu vorgesehen ist, eine Mehrzahl an Werkzeugaufnahmen (12) gleichzeitig zu kühlen.

13. Multispann- und Mess- und/oder Einstellstation (68) zumindest nach den Ansprüchen 8 und 11, **dadurch gekennzeichnet, dass** die Schrumpfspannstation (30) eine Kühlstation (32) und eine Heizstation (34) umfasst, welche als voneinander getrennte Module (36) ausgebildet sind.

14. Multispann- und Mess- und/oder Einstellstation (68) nach einem der vorhergehenden Ansprüche, **dadurch gekennzeichnet, dass** zumindest eine Werkzeugeinspanneinheit (14, 16, 18, 20) als eine Pressspannstation (38) ausgebildet ist, welche zumindest dazu vorgesehen ist, Werkzeuge (10) mittels eines Verpressens von Werkzeugaufnahmen (12) in die Werkzeugaufnahmen (12) zu montieren.

15. Multispann- und Mess- und/oder Einstellstation (68) nach einem der vorhergehenden Ansprüche, **dadurch gekennzeichnet, dass** zumindest eine Werkzeugeinspanneinheit (14, 16, 18, 20) als eine Hydrodehn-Schraubstation (40) ausgebildet ist.

16. Multispann- und Mess- und/oder Einstellstation (68) nach Anspruch 15, **dadurch gekennzeichnet, dass** die Hydrodehn-Schraubstation (40) ein Schraubkopfmagazin (42) aufweist, welches eine Mehrzahl unterschiedlich geformter und/oder unterschiedlich großer Schraubköpfe (44) umfasst, wobei die Hydrodehn-Schraubstation (40) dazu vorgesehen ist, einen automatisierten Wechsel des aktiven Schraubkopfes (44) vorzunehmen.

17. Multispann- und Mess- und/oder Einstellstation (68) nach einem der vorhergehenden Ansprüche, **dadurch gekennzeichnet, dass** zumindest eine Werkzeugeinspanneinheit (14, 16, 18, 20) als eine Überwurfmutter-Schraubstation (46) ausgebildet ist, welche dazu vorgesehen ist, Werkzeuge (10) mittels eines Anziehens/Lösens einer Überwurfmutter (72) in/aus einer Werkzeugaufnahme (12) zu montieren/demontieren.

18. Multispann- und Mess- und/oder Einstellstation (68) nach Anspruch 17, **dadurch gekennzeichnet, dass** die Überwurfmutter-Schraubstation (46) dazu vorgesehen ist, eine werkzeugflächenlose Überwurfmutter (72) vollautomatisiert festzuziehen und/oder zu lösen.

19. Multispann- und Mess- und/oder Einstellstation (68) nach einem der vorhergehenden Ansprüche, **gekennzeichnet durch** zumindest eine Reinigungsstation (48, 92), welche dazu vorgesehen ist, zumindest einen Teil des Werkzeugs (10) vor einem Montieren in der Werkzeugaufnahme (12) oder vor einem Demontieren des Werkzeugs (10) aus der Werkzeugaufnahme (12) zu reinigen.

20. Multispann- und Mess- und/oder Einstellstation (68) nach Anspruch 19, **dadurch gekennzeichnet, dass** das Mess- und/oder Einstellgerät (22) zumindest dazu vorgesehen ist, eine Reinheit eines in der Reinigungsstation (48, 92) gereinigten Teils eines Werkzeugs (10) optisch zu überprüfen.

21. Multispann- und Mess- und/oder Einstellstation (68) nach einem der vorhergehenden Ansprüche, **gekennzeichnet durch** zumindest eine Wuchtstation (50), welche dazu vorgesehen ist, eine Unwucht einer Kombination aus Werkzeug (10) und Werkzeugaufnahme (12) zu bestimmen.

22. Multispann- und Mess- und/oder Einstellstation (68) nach einem der vorhergehenden Ansprüche, **dadurch gekennzeichnet, dass** das Mess- und/oder Einstellgerät (22) ein Vorsatzhaltermagazin (52) zu einer Bereitstellung einer Mehrzahl unterschiedlicher Vorsatzhalter (54) aufweist.

23. Multispann- und Mess- und/oder Einstellstation (68) nach einem der vorhergehenden Ansprüche, **gekennzeichnet durch** eine Werkzeugmontagestation (56), welche dazu vorgesehen ist, aus mehreren Teilen bestehende Werkzeuge (10) zu montieren und/oder zu demontieren.

24. Multispann- und Mess- und/oder Einstellstation (68) nach einem der vorhergehenden Ansprüche, **gekennzeichnet durch** eine Erkennungseinheit (58), welche dazu vorgesehen ist, eine Werkzeugaufnahme (12) zu erkennen und durch eine Steuer- und/oder Regeleinheit (60) , welche dazu vorgesehen ist, auf Grundlage der durch die Erkennungseinheit (58) ermittelten Daten zumindest eine Werkzeugeinspanneinheit (14, 16, 18, 20) vorzubereiten und anschließend den Handhabungsroboter (24) dazu zu veranlassen, die Werkzeugaufnahme (12) der vorbereiteten Werkzeugeinspanneinheit (14, 16, 18, 20) zu einer Montage/Demontage eines Werkzeugs (10) in/aus die/der Werkzeugaufnahme (12) zuzuführen.

25. Multispann- und Mess- und/oder Einstellstation (68) zumindest nach Anspruch 6, **dadurch gekennzeichnet, dass** das Gehäuse (26) zumindest eine Schleuseneinheit (62) aufweist, welche zu einem Be- und/oder Entladen von Werkzeugen (10) und/oder Werkzeugaufnahmen (12) vorgesehen ist, wobei die Schleuseneinheit (62) zumindest eine Signalvorrichtung (64) umfasst, die dazu vorgesehen ist, zumindest ein Signal an einen Bediener auszugeben, anhand dessen erkennbar ist, ob in der Schleuseneinheit (62) befindliche, fertig montierte Kombinationen aus Werkzeug (10) und Werkzeugaufnahme (12) ordnungsgemäß montiert sind.

26. Multispann- und Mess- und/oder Einstellstation (68) nach Anspruch 25, **dadurch gekennzeichnet, dass** die Signalvorrichtung (64) als eine Leuchteneinheit (66) ausgebildet ist, welche dazu vorgesehen ist, Leuchtsignale in zumindest zwei verschiedenen Lichtfarben auszugeben.

27. Verfahren zu einer Montage/Demontage eines Werkzeugs (10) in/aus einer Werkzeugaufnahme (12) mit einer Multispann- und Mess- und/oder Einstellstation (68) nach einem der vorhergehenden Ansprüche, **dadurch gekennzeichnet, dass** eine Werkzeugaufnahme (12) zumindest teilautomatisiert erkannt wird und anschließend vollautomatisiert einer passenden Werkzeugeinspanneinheit (14, 16, 18, 20) aus einer Mehrzahl an Werkzeugeinspanneinheiten (14, 16, 18, 20) zugeführt wird.

## Claims

1. Multi-clamping and measuring and/or presetting station (68) for tools (10), which is configured for an automated, preferably fully automated, mounting of tools (10) into tool holders (12) and/or demounting of tools (10) from tool holders (12) and for an adjustment, in particular at least a length adjustment, and/or measuring of the tools (10) in the tool holders (12),
with at least two, in particular fully automated, tool clamping-in units (14, 16), with at least one, in particular optical, measuring and/or presetting apparatus (22) for tools (10) and
with at least one handling robot (24), which is at least configured to move tools (10) and tool holders (12) between the tool clamping-in units (14, 16) and the measuring and/or presetting apparatus (22),
**characterised in that** the at least two, in particular fully automated, tool clamping-in units (14, 16) are embodied as different tool clamping-in units (14, 16), which are at least configured for an automated, preferably fully automated, mounting of tools (10) in respectively different tool holders (12) with respectively different clamping methods, and/or for an automated, preferably fully automated, demounting of tools (10) from respectively different tool holders (12) with respectively different clamping methods.

2. Multi-clamping and measuring and/or presetting station (68) according to claim 1,
**characterised in that** the tool clamping-in units (14, 16, 18, 20) are implemented separately, in particular completely separately, from one another.

3. Multi-clamping and measuring and/or presetting station (68) according to claim 1 or 2,
**characterised by** at least one third tool clamping-in unit (18) for tool holders (12) with a third clamping method which differs from the clamping methods that can be carried out by the two other tool clamping-in units (14, 16).

4. Multi-clamping and measuring and/or presetting station (68) according to claim 3,
**characterised by** at least one fourth clamping-in unit (20) for tools (12) with a fourth clamping method which differs from the clamping methods that can be carried out by the three other tool clamping-in units (14, 16, 18).

5. Multi-clamping and measuring and/or presetting station (68) according to one of the preceding claims,
**characterised in that** the tool clamping-in units (14, 16, 18, 20) and the measuring and/or presetting apparatus (22) are arranged at least section-wise around the handling robot (24).

6. Multi-clamping and measuring and/or presetting station (68) according to one of the preceding claims,
**characterised by** a shared housing (26) which encloses at least the handling robot (24), the tool clamping-in units (14, 16, 18, 20) and the measuring and/or presetting apparatus (22), at least to a large extent.

7. Multi-clamping and measuring and/or presetting station (68) according to claim 6,
**characterised in that** the housing (26) comprises a flap (28) that can be opened and permits access to the measuring and/or presetting apparatus (22) as well as a manual operation of the measuring and/or presetting apparatus (22).

8. Multi-clamping and measuring and/or presetting station (68) according to one of the preceding claims,
**characterised by** a modular construction.

9. Multi-clamping and measuring and/or presetting station (68) at least according to claims 6 and 8,
**characterised in that** at least an arrangement at least of part of the components (14, 16, 18, 20, 22, 24, 32, 34, 48, 50, 56, 76, 80, 92) of the multi-clamping and measuring and/or presetting station (68) within the housing (26) is module-wise selectable and/or module-wise modifiable.

10. Multi-clamping and measuring and/or presetting station (68) at least according to claims 6 and 8,
**characterised in that** at least a combination at least of part of the components (14, 16, 18, 20, 22, 24, 32, 34, 48, 50, 56, 76, 80, 92) of the multi-clamping and measuring and/or presetting station (68) within the housing (26) is module-wise selectable and/or module-wise modifiable.

11. Multi-clamping and measuring and/or presetting station (68) according to one of the preceding claims,
**characterised in that** at least one tool clamping-in unit (14, 16, 18, 20) is embodied as a shrink-clamping station (30).

12. Multi-clamping and measuring and/or presetting station (68) according to claim 11,
**characterised in that** the shrink-clamping station (30) comprises a cooling station (32), which is configured for a simultaneous cooling of a plurality of tool holders (12).

13. Multi-clamping and measuring and/or presetting station (68) at least according to claims 8 and 11,
**characterised in that** the shrink-clamping station (30) comprises a cooling station (32) and a heating station (34) which are implemented as respectively separate modules (36).

14. Multi-clamping and measuring and/or presetting station (68) according to one of the preceding claims,
**characterised in that** at least one tool clamping-in unit (14, 16, 18, 20) is embodied as a compression-clamping station (38), which is at least configured for mounting tools (10) in tool holders (12) via pressing of the tool holders (12).

15. Multi-clamping and measuring and/or presetting station (68) according to one of the preceding claims,
**characterised in that** at least one tool clamping-in unit (14, 16, 18, 20) is embodied as a hydraulic-expansion screw-driving station (40).

16. Multi-clamping and measuring and/or presetting station (68) according to claim 15,
**characterised in that** the hydraulic-expansion screw-driving station (40) comprises a screw head magazine (42) containing a plurality of screw heads (44) with different shapes and/or different sizes, the hydraulic-expansion screw-driving station (40) being configured to carry out an automated exchange of the active screw head (44).

17. Multi-clamping and measuring and/or presetting station (68) according to one of the preceding claims,
**characterised in that** at least one tool clamping-in unit (14, 16, 18, 20) is embodied as a union nut screw-driving station (46) which is configured for a mounting/demounting of tools (10) in/from a tool holder (12) by a tightening/releasing of a union nut (72).

18. Multi-clamping and measuring and/or presetting station (68) according to claim 17,
**characterised in that** the union nut screw-driving station (46) is configured for a fully automated tightening and/or releasing of a tool-surface-free union nut (72).

19. Multi-clamping and measuring and/or presetting station (68) according to one of the preceding claims,
**characterised by** at least one cleaning station (48, 92), which is configured for cleaning at least a portion of the tool (10) prior to a mounting in the tool holder (12) or prior to a demounting of the tool (10) from the tool holder (12).

20. Multi-clamping and measuring and/or presetting station (68) according to claim 19,
**characterised in that** the measuring and/or presetting apparatus (22) is at least configured for an optical examination of a cleanliness of a portion of a tool (10) that has been cleaned in the cleaning station (48, 92).

21. Multi-clamping and measuring and/or presetting station (68) according to one of the preceding claims,
**characterised by** at least one balancing station (50), which is configured for a determination of an imbalance of a combination of tool (10) and tool holder (12).

22. Multi-clamping and measuring and/or presetting station (68) according to one of the preceding claims,
**characterised in that** the measuring and/or presetting apparatus (22) comprises an attachment holder magazine (52) to provide a plurality of different attachment holders (54).

23. Multi-clamping and measuring and/or presetting station (68) according to one of the preceding claims,
**characterised by** a tool assembly station (56) which is configured for a mounting and/or demounting of tools (10) that are composed of several parts.

24. Multi-clamping and measuring and/or presetting station (68) according to one of the preceding claims,
**characterised by** a recognition unit (58) which is configured for a recognition of a tool holder (12), and by a control and/or regulation unit (60) which is configured, on the basis of the data determined by the recognition unit (58), to prepare at least one tool clamping-in unit (14, 16, 18, 20) and then to prompt the handling robot (24) to convey the tool holder (12) to the prepared tool clamping-in unit (14, 16, 18, 20) for a mounting/demounting of a tool (10) into/from the tool holder (12).

25. Multi-clamping and measuring and/or presetting station (68) at least according to claim 6,
**characterised in that** the housing (26) comprises at least one gate unit (62) which is configured for a loading and/or unloading of tools (10) and/or tool holders (12), with the gate unit (62) comprising at least one signal device (64) that is configured to output to an operator at least one signal by which it may be perceived whether ready-mounted combinations of tool (10) and tool holder (12) which are situated in the gate unit (62) have been assembled correctly.

26. Multi-clamping and measuring and/or presetting station (68) according to claim 25,
**characterised in that** the signal device (64) is implemented as a luminaire unit (66), which is configured to output light signals in at least two different light colours.

27. Method for a mounting/demounting of a tool (10) into/from a tool holder (12), with a multi-clamping and measuring and/or presetting station (68) according to one of the preceding claims,
**characterized in that** a tool holder (12) is recognized in an at least partly automated manner and is then fully-automatedly conveyed to a suitable tool clamping-in unit (14, 16, 18, 20) of a plurality of tool clamping-in units (14, 16, 18, 20).

## Revendications

1. Station de multitension et de mesure et/ou de réglage (68) pour outils (10), prévue pour le montage automatisé, préférablement entièrement automatisé, des outils (10) dans des logements d'outil (12) et/ou pour le démontage automatisé, préférablement entièrement automatisé, des outils (10) des logements d'outil (12) et pour le réglage, en particulier au moins la mise à longueur, et/ou la mesure des outils (10) dans les logements d'outil (12), avec au moins deux unités enserrage-outil (14, 16), en particulier entièrement automatisées,
avec au moins un appareil, en particulier appareil optique, de réglage et/ou mesure (22) pour des outils (10), et
avec au moins un robot à maniement (24) qui est au moins prévu pour mouvoir des outils (10) et des logements d'outil (12) entre les unités enserrage-outil (14, 16) et l'appareil de mesure et/ou réglage (22),
**caractérisée en ce que** les au moins deux unités enserrage-outil (14, 16), en particulier entièrement automatisées, sont réalisées comme des unités enserrage-outil (14, 16) différentes, qui sont au moins prévues pour le montage automatisé, préférablement entièrement automatisé, des outils (10) dans des logements d'outil (12) respectivement différents avec des méthodes de serrage respectivement différentes, et/ou pour le démontage automatisé, préférablement entièrement automatisé, des outils (10) des logements d'outil (12) respectivement différents avec des méthodes de serrage respectivement différentes.

2. Station de multitension et de mesure et/ou de réglage (68) selon la revendication 1,
**caractérisée en ce que** les unités enserrage-outil (14, 16, 18, 20) sont réalisées - en particulier complètement - séparées les unes des autres.

3. Station de multitension et de mesure et/ou de réglage (68) selon la revendication 1 ou 2,
**caractérisée par** au moins une troisième unité enserrage-outil (18) pour des logements d'outils (12) avec une troisième méthode de serrage différant des méthodes de serrage exécutables par les deux autres unités enserrage-outil (14, 16).

4. Station de multitension et de mesure et/ou de réglage (68) selon la revendication 3,
**caractérisée par** au moins une quatrième unité enserrage-outil (20) pour des logements d'outil (12) avec une quatrième méthode de serrage différant des méthodes de serrage exécutables par les trois autres unités enserrage-outil (14, 16, 18).

5. Station de multitension et de mesure et/ou de réglage (68) selon l'une des revendications précédentes,
**caractérisée en ce que** les unités enserrage-outil (14, 16, 18, 20) et l'appareil de mesure et/ou réglage (22) sont disposés au moins par sections autour du robot à maniement (24).

6. Station de multitension et de mesure et/ou de réglage (68) selon l'une des revendications précédentes,
**caractérisée par** un boîtier commun (26) entourant au moins en grande partie au moins le robot à maniement (24), les unités enserrage-outil (14, 16, 18, 20) et l'appareil de mesure et/ou réglage (22).

7. Station de multitension et de mesure et/ou de réglage (68) selon la revendication 6,
**caractérisée en ce que** le boîtier (26) comporte un clapet (28) qui peut être ouvert et qui permet accès à l'appareil de mesure et/ou réglage (22), permettant actionnement manuel de l'appareil de mesure et/ou réglage (22).

8. Station de multitension et de mesure et/ou de réglage (68) selon l'une des revendications précédentes,
**caractérisée par** une construction modulaire.

9. Station de multitension et de mesure et/ou de réglage (68) au moins selon les revendications 6 et 8,
**caractérisée en ce qu'**au moins un arrangement au moins d'une partie des composants (14, 16, 18, 20, 22, 24, 32, 34, 48, 50, 56, 76, 80, 92) de la station de multitension et de mesure et/ou de réglage (68) dans le boîtier (26) peut être selectionnée modulairement et/ou modifiée modulairement.

10. Station de multitension et de mesure et/ou de réglage (68) au moins selon les revendications 6 et 8,
**caractérisée en ce qu'**au moins une combinaison au moins d'une partie des composants (14, 16, 18, 20, 22, 24, 32, 34, 48, 50, 56, 76, 80, 92) de la station de multitension et de mesure et/ou de réglage (68) dans le boîtier (26) peut être selectionnée modulairement et/ou modifiée modulairement.

11. Station de multitension et de mesure et/ou de réglage (68) selon l'une des revendications précédentes,
**caractérisée en ce qu'**au moins une unité enserrage-outil (14, 16, 18, 20) est réalisée comme station de serrage à rétraction (30).

12. Station de multitension et de mesure et/ou de réglage (68) selon la revendication 11,
**caractérisée en ce que** la station de serrage à rétraction (30) comprend une station de refroidissement (32) prévue pour un refroidissement simultané d'une pluralité de logements d'outil (12).

13. Station de multitension et de mesure et/ou de réglage (68) au moins selon les revendications 8 et 11,
**caractérisée en ce que** la station de serrage à rétraction (30) comprend une station de refroidissement (32) et une station de chauffage (34) qui sont réalisées comme modules (36) séparées l'un de l'autre.

14. Station de multitension et de mesure et/ou de réglage (68) selon l'une des revendications précédentes,
**caractérisée en ce qu'**au moins une unité enserrage-outil (14, 16, 18, 20) est réalisée comme station de serrage-pressage (38) qui est au moins prévue pour le montage des outils (10) dans les logements d'outil (12) par le biais de pressage des logements d'outil (12).

15. Station de multitension et de mesure et/ou de réglage (68) selon l'une des revendications précédentes,
**caractérisée en ce qu'**au moins une unité enserrage-outil (14, 16, 18, 20) est réalisée comme station de vissage à expansion hydraulique (40).

16. Station de multitension et de mesure et/ou de réglage (68) selon la revendication 15,
**caractérisée en ce que** la station de vissage à expansion hydraulique (40) comporte un magasin de têtes-vissage (42) comprenant une pluralité de têtes-vissage (44) ayant des formes et/ou tailles différentes, où la station de vissage à expansion hydraulique (40) est prévue pour exécuter un échange automatisé de la tête-vissage (44) active.

17. Station de multitension et de mesure et/ou de réglage (68) selon l'une des revendications précédentes,
**caractérisée en ce qu'**au moins une unité enserrage-outil (14, 16, 18, 20) est réalisée comme station de vissage à écrou-raccord (46) qui est prévue pour le montage/démontage des outils (10) dans un logement d'outil (12) et/ou d'un logement d'outil (12) en serrant/relâchant un écrou-raccord (72).

18. Station de multitension et de mesure et/ou de réglage (68) selon la revendication 17,
**caractérisée en ce que** la station de vissage à écrou-raccord (46) est prévue pour le serrage et/ou le relâchement entièrement automatisé d'un écrou-raccord (72) n'ayant aucune surface à outil.

19. Station de multitension et de mesure et/ou de réglage (68) selon l'une des revendications précédentes,
**caractérisée par** au moins une station de nettoyage (48, 92) qui est prévue pour le nettoyage au moins d'une partie de l'outil (10) préalablement au montage dans le logement d'outil (12) ou préalablement au démontage de l'outil (10) du logement d'outil (12).

20. Station de multitension et de mesure et/ou de réglage (68) selon la revendication 19,
**caractérisée en ce que** l'appareil de mesure et/ou réglage (22) est au moins prévu pour contrôler optiquement la propreté d'une partie d'un outil (10) nettoyée dans la station de nettoyage (48, 92).

21. Station de multitension et de mesure et/ou de réglage (68) selon l'une des revendications précédentes,
**caractérisée par** au moins une station d'équilibrage (50) qui est prévue pour déterminer un balourd d'une combinaison outil (10)-logement d'outil (12).

22. Station de multitension et de mesure et/ou de réglage (68) selon l'une des revendications précédentes,
**caractérisée en ce que** l'appareil de mesure et/ou réglage (22) comporte un magasin de portes-accessoires (52) pour le fournissement d'une pluralité des portes-accessoires (54) différents.

23. Station de multitension et de mesure et/ou de réglage (68) selon l'une des revendications précédentes,
**caractérisée par** une station à montage d'outil (56) qui est prévue pour le montage et/ou le démontage des outils (10) composés de plusieurs composants.

24. Station de multitension et de mesure et/ou de réglage (68) selon l'une des revendications précédentes,
**caractérisée par** une unité d'identification (58) qui est prévue pour identifier un logement d'outil (12) et par une unité de commande et/ou de régulation (60) qui est prévue, sur la base des données déterminées par l'unité d'identification (58), pour préparer au moins une unité enserrage-outil (14, 16, 18, 20) et pour ensuite faire le robot à maniement (24) alimenter le logement d'outil (12) de l'unité enserrage-outil préparée (14, 16, 18, 20) au montage/démontage d'un outil (10) dans un logement d'outil (12) / d'un logement d'outil (12).

25. Station de multitension et de mesure et/ou de réglage (68) au moins selon la revendication 6,
**caractérisée en ce que** le boîtier (26) comporte au moins une unité-sas (62) prévue pour le chargement et/ou déchargement des outils (10) et/ou des logements d'outil (12), l'unité-sas (62) comprenant au moins un dispositif de signal (64) qui est prévu pour émettre à un opérateur au moins un signal par le biais duquel on peut percevoir si des combinaisons outil (10)-logement d'outil (12), situées dans l'unité-sas (62) et complètement montées, sont montées correctement.

26. Station de multitension et de mesure et/ou de réglage (68) selon la revendication 25,
**caractérisée en ce que** le dispositif de signal (64) est réalisé comme unité luminaire (66) qui est prévue pour émettre des signaux lumineux en au moins deux couleurs de lumière différentes.

27. Procédé pour le montage/démontage d'un outil (10) dans un logement d'outil (12) / d'un logement d'outil (12), avec une station de multitension et de mesure et/ou de réglage (68) selon l'une des revendications précédentes,
**caractérisée en ce qu'**un logement d'outil (12) est identifié de manière au moins semiautomatisée et est ensuite alimenté à une unité enserrage-outil (14, 16, 18, 20) appropriée d'une pluralité d'unités enserrage-outil (14, 16, 18, 20).
